# EUROPEAN PATENT SPECIFICATION

(11) **EP 1 306 243 B1**
(45) Date of publication and mention of the grant of the patent: **04.08.2004**
(21) Application number: 02023717.8
(22) Date of filing: 23.10.2002
(51) Int. Cl.: B60H 1/00

(54) **Air conditioner for vehicle and method for attaching the same**
Kraftfahrzeugklimaanlage und dazugehöriges Befestigungsverfahren
Système de climatisation de véhicule et méthode de fixation associée

(30) Priority: 23.10.2001 JP 2001324541; 23.10.2001 JP 2001324782; 23.10.2001 JP 2001324918
(43) Date of publication of application: 02.05.2003
(73) Proprietor: Japan Climate Systems Corporation, Higashihiroshima-shi, Hiroshima 739-0153 (JP)
(72) Inventor: Hakata, Toshiki Japan Climate Systems Corp., Higashihiroshima-shi, Hiroshima 739-0153 (JP); Hashimoto, Takashi Japan Climate Systems Corp., Higashihiroshima-shi, Hiroshima 739-0153 (JP); Harada, Yosuke Japan Climate Systems Corp., Higashihiroshima-shi, Hiroshima 739-0153 (JP); Tanimura, Hideo Japan Climate Systems Corp., Higashihiroshima-shi, Hiroshima 739-0153 (JP); Okumoto, Yoshiharu Japan Climate Systems Corp., Higashihiroshima-shi, Hiroshima 739-0153 (JP); Yamamoto, Kazuhiro Japan Climate Systems Corp., Higashihiroshima-shi, Hiroshima 739-0153 (JP); Kimura, Taizo Japan Climate Systems Corp., Higashihiroshima-shi, Hiroshima 739-0153 (JP); Matsuura, Koji Japan Climate Systems Corp., Higashihiroshima-shi, Hiroshima 739-0153 (JP); Takenobu, Yutaka Japan Climate Systems Corp., Higashihiroshima-shi, Hiroshima 739-0153 (JP); Mayumi, Hiroshi Japan Climate Systems Corp., Higashihiroshima-shi, Hiroshima 739-0153 (JP); Yamamoto, Takehiro Japan Climate Systems Corp., Higashihiroshima-shi, Hiroshima 739-0153 (JP); Shimazu, Dai Japan Climate Systems Corp., Higashihiroshima-shi, Hiroshima 739-0153 (JP)
(74) Representative: Laufhütte, Dieter, Dr.-Ing.

(56) References cited:
- FR-A- 2 802 471
- US-A- 5 979 965
- US-A- 5 997 078
- US-B1- 6 296 303

## Description

### BACKGROUND OF THE INVENTION

The present invention relates to an air conditioner for a vehicle and a method for attaching the same, in which a unit for providing conditioned air by a heat exchanger is attached to an instrument panel member (cross car beam) for reinforcing an instrument panel of a vehicle that extends in the vehicle width direction in the instrument panel.

In general, an air conditioner for a vehicle includes an air conditioning unit for providing conditioned air by a heat exchanger, such as an evaporator and a heater core, and a blower unit for supplying an air to be conditioned to the air conditioning unit. The both units are disposed in an instrument panel of the vehicle. Further, in general the units are attached to a different vehicle body from the instrument panel.

Meanwhile, recently a modularization of air conditioner for a vehicle is known. That is, the both units described above and other parts are attached to the instrument panel in advance, and this module is installed to the vehicle body. In this modularization, the both units above are attached to an instrument panel member (cross car beam) for reinforcing the instrument panel extending in the vehicle width direction in the instrument panel. Document FR-A-2 802 471 gives an example of such an air conditioner.

Now, the instrument panel is required appropriate stiffness so that any vibrations of a vehicle handle and other instrument panel potions do not occur according to an engine operation. However, it is difficult to satisfy this requirement by just increasing stiffness of the instrument panel body or instrument panel member itself from space and cost aspects.

Further, there may be some ideas in the above modularization in which stiffness of a whole instrument panel assembly (instrument panel module) can be increased by utilizing the air conditioning unit and blower unit because the both units are attached to the instrument panel and others.

However, in a conventional modularization, the air conditioning unit and the blower unit are attached to the instrument panel member through brackets or the like at only upper portions thereof. Therefore, they are formed in such a manner that the both units just hang down form the instrument panel member, and so the both units may not improve stiffness of the instrument panel module.

Additionally, the above situation, in which the both units hang down the instrument panel member, may cause some problems, such as position difference, over time consuming, when the instrument panel module is carried in the vehicle body and attached to predetermined position of the vehicle body.

Accordingly, the conventional unit attachment structure and attachment method cannot provide appropriate attachment situation with enough stiffness of the units.

### SUMMARY OF THE INVENTION

In view of the above-described conventional problems, it is an object of the present invention to improve stiffness of an air conditioning unit and a blower unit attached to an instrument panel member and their installment works to a vehicle body, by adopting appropriate attachment structures and attachment methods.

In order to achieve the above object, the present invention provides air conditioner for a vehicle comprising an air conditioning unit for providing conditioned air by a heat exchanger, a blower unit for supplying an air to be conditioned to the air conditioning unit, an instrument panel member for reinforcing an instrument panel of the vehicle that extends in the vehicle width direction, wherein the both units are attached to the instrument panel member so that the units are disposed side by side in the instrument panel, a first connecting portion disposed at the upper portion of the air conditioning unit that is to be attached to the instrument panel member, a second connecting portion disposed at the upper portion of the blower unit, that is to be attached to the instrument panel member, an air intake for introducing the air from said blower unit into said air conditioning unit, and a connecting portion for interconnecting the both units, which is disposed near said air intake.

According to the air conditioner for a vehicle of the present invention, the blower unit and the air conditioning unit are attached to the instrument panel member and also interconnected resulting in improvement of attachment stiffness of the both units. Further, stiffness of the strucure around the air intake improves, so that a leakage of the air can be avoided. Further, the instrument panel with the instrument panel member attached by the both units that are interconnected is installed to the vehicle body. Therefore, it provides easy installment of the air conditioner to the vehicle body.

Further, it is preferred that the present invention provides air conditioner of the above, wherein the connecting portion is disposed at lower portions of the both units.

According to this preferred air conditioner for a vehicle of the present invention, the both units attached to the instrument panel member are interconnected at appropriate position resulting in balanced integration of the units.

Further, it is preferred that the present invention provides air conditioner of the above, wherein the first connecting portion is disposed at both of side walls of the air conditioning unit.

According to this preferred air conditioner for a vehicle of the present invention, attachment stiffness of the air conditioning unit improves with ease.

Further, it is preferred that the present invention provides air conditioner of the above, wherein the second connecting portion is disposed at both of side walls of the blower unit.

According to this preferred air conditioner for a vehicle of the present invention, attachment stiffness of the blower unit improves with ease.

Further, it is preferred that the present invention provides air conditioner of the above which is described as the second preferred invention, wherein the second connecting portion is disposed at both of side walls of the blower unit.

According to this preferred air conditioner for a vehicle of the present invention, attachment stiffness of the air conditioning unit and the blower unit improves with ease.

Further, it is preferred that the present invention provides air conditioner of the above, wherein one of the first connection portion disposed at a side wall that is located at the side of the blower unit and one of the second connecting portion disposed at a side wall that is located at the side of the air conditioning unit are overlapped, and the overlapped connecting portion are attached to the instrument panel member.

According to this preferred air conditioner for a vehicle of the present invention, attachment stiffness of the air conditioning unit and the blower unit improves with ease, and attachment works also improves.

Further, it is preferred that the present invention provides air conditioner of the above, wherein at least one of the first and second connecting portions is attached directly to the instrument panel member.

According to this preferred air conditioner for a vehicle of the present invention, connection stiffness of at least one of the air conditioning unit and the blower unit to the instrument panel member improves.

Further, it is preferred that the present invention provides air conditioner of the above, wherein the second connecting portion is disposed at a side wall of the blower unit that is located at opposite side to the air conditioning unit, and the connecting portion is attached directly to the instrument panel member.

According to this preferred air conditioner for a vehicle of the present invention, connection stiffness of the blower unit to the instrument panel member improves.

Further, it is preferred that the present invention provides air conditioner of the above, wherein at least one of the second connecting portions is attached directly to the instrument panel member, and an attaching surface of the connecting portion to the instrument panel member has a configuration that matches an external shape of the instrument panel member when seeing from the vehicle width direction.

According to this preferred air conditioner for a vehicle of the present invention, attached portion to the instrument panel member forms a surface, and therefore it can be avoided that the attached portion is buckled or broken by stress concentration, resulting in improved connection stiffness of the blower unit to the instrument panel member.

Further, it is preferred that the present invention provides air conditioner of the above, wherein the connecting potion is disposed at the both of the air conditioning unit and blower unit, and the both units are connected by the connecting portion.

According to this preferred air conditioner for a vehicle of the present invention, connection of the both units can be achieved easily and securely.

Further, it is preferred that the present invention provides air conditioner of the above, wherein the connecting potion is disposed at the both of the air conditioning unit and blower unit, one of the connecting portion is a projection and the other of the connecting portion is a hole, the projection is provided with a hook at its end, and the projection is inserted into the hole and the hook is locked in there.

According to this preferred air conditioner for a vehicle of the present invention, connection of the both units can be achieved easily and securely, and its connection can be maintained certainly.

Further, it is preferred that the present invention provides air conditioner of the above, wherein the connecting potion is disposed at the both of the air conditioning unit and blower unit, the both units are connected by the connecting portion, and the air intake for introducing the air from the blower unit into the air conditioning unit is provided at a front side of the vehicle.

According to this preferred air conditioner for a vehicle of the present invention, stiffness of the structure around the air intake improves, so that a leakage of the air can be avoided.

Further, it is preferred that the present invention provides air conditioner of the above, wherein the connecting potion is disposed at the both of the air conditioning unit and blower unit, the both units are connected by the connecting portion, an air intake for introducing the air from the blower unit into the air conditioning unit is provided at a front side of the vehicle, the air conditioning unit includes a heat exchanger for cooling the introduced air through the air intake and a heat exchanger for warming the air flowing down through the heat exchanger for cooling air, and the connecting portion is disposed near the air intake and at lower position of the heat exchanger for cooling air.

According to this preferred air conditioner for a vehicle of the present invention, the heat exchanger for cooling air can be supported in the air conditioning unit securely.

Further, it is preferred that the present invention provides air conditioner of the above, wherein the connecting potion is disposed at the both of the air conditioning unit and blower unit, the both units are connected by the connecting portion, an air intake for introducing the air from the blower unit into the air conditioning unit is provided at a front side of the vehicle, the air conditioning unit includes a heat exchanger for cooling the introduced air through the air intake and a heat exchanger for warming the air flowing down through the heat exchanger for cooling air, the heat exchanger for cooling air is disposed in the air conditioning unit so that it extends in a substantially vertical direction, the heat exchanger for warming air is disposed at a vehicle rear side of the heat exchanger for cooling air so that it is inclined in such a manner that its upper end is away from the heat exchanger for cooling air, and the connecting portion is disposed near the air intake and at lower position of the heat exchanger for cooling air.

According to this preferred air conditioner for a vehicle of the present invention, the air conditioning unit is attached to the instrument panel member at the upper position of the heat exchanger for cooling air and attached to the blower unit at the lower position of the heat exchanger for cooling air, resulting in a stable attachment of the air conditioning unit to the instrument panel member.

Further, it is preferred that the present invention provides air conditioner of the above, wherein a third connecting portion to be attached to a vehicle body is provided at any of the both units.

Further, it is preferred that the present invention provides air conditioner of the above, wherein a third connecting portion to be attached to a vehicle body is provided at the blower unit.

Further, it is preferred that the present invention provides air conditioner of the above, wherein a third connecting portion to be attached to a vehicle body is provided at the air conditioning unit.

According to these three preferred air conditioner for a vehicle of the present invention, attachment stiffness of the both units improves further, and therefore vibrations of the both units during a vehicle running can be prevented.

Further, it is preferred that the present invention provides air conditioner of the above, wherein a third connecting portion to be attached to a vehicle body is provided at the both units respectively, the third connecting portion of the both units are overlapped, and the overlapped connecting portion are attached to a vehicle body.

According to this preferred air conditioner for a vehicle of the present invention, attachment stiffness of the both units can be improved as much as possible without complicated attachment works of the both units.

Further, it is preferred that the present invention provides air conditioner of the above, wherein a stay extending downward is fixed to the instrument panel member, and a lower connecting portion fixed to a lower end of the stay is disposed at a lower portion of the air conditioning unit.

According to this preferred air conditioner for a vehicle of the present invention, the air conditioning unit can be attached to the instrument panel member securely and certainly, and therefore a stiffness of a module in which the both units are attached to the instrument panel can improve.

Further, it is preferred that the present invention provides air conditioner of the above, wherein two stays extending downward at both sides of the air conditioning unit are fixed to the instrument panel member respectively, and lower connecting portion fixed to lower ends of the stays are disposed at lower portion of the air conditioning unit.

According to this preferred air conditioner for a vehicle of the present invention, the air conditioning unit can be attached to the instrument panel member more securely and certainly, and therefore a stiffness of a module can improve more.

Further, it is preferred that the present invention provides air conditioner of the above, wherein two stays extending downward and rearward of the vehicle at both sides of the air conditioning unit are fixed to the instrument panel member respectively, and lower connecting portion fixed to lower ends of the stays are disposed at lower portion of the air conditioning unit.

According to this preferred air conditioner for a vehicle of the present invention, the same effects as the above are achieved.

Further, it is preferred that the present invention provides air conditioner of the above, wherein two stays extending downward and rearward of the vehicle at both sides of the air conditioning unit are fixed to the instrument panel member respectively, lower connecting portion fixed to lower ends of the stays are disposed at lower portion of the air conditioning unit, the connecting portion is disposed at the vehicle front side of the lower connecting portion, and the first connecting portion, the lower connecting portion and the connecting portion are disposed in such a manner that these are located at vertex of a triangle seeing from the vehicle width direction.

According to this preferred air conditioner for a vehicle of the present invention, the air conditioning unit can be attached to the instrument panel member including the stays with appropriate balance, and therefore the instrument panel module with appropriate stiffness is provided.

Further, it is preferred that the present invention provides air conditioner of the above, wherein a damper is disposed in either case of the blower units or the air conditioning unit to control a stream of air to be conditioned or conditioned air, a linkage member for controlling the damper is disposed at outer surface of the either case, and a temporary attachment portion is disposed so that the linkage member is temporarily attached to the outer surface at its predetermined position by installing a stopper.

According to this preferred air conditioner for a vehicle of the present invention, the linkage member can be attached temporarily to the outer surface of the case with ease at the predetermined position without any movement by attaching the stopper to the temporary attachment portion when the both units are attached.

Further, it is preferred that the present invention provides air conditioner of the above, wherein a damper is disposed in either case of the blower unit or the air conditioning unit to control a stream of air to be conditioned or conditioned air, a linkage member for controlling the damper is disposed at outer surface of the either case, a temporary attachment portion is disposed so that the linkage member is temporarily attached to the outer surface at its predetermined position by installing a stopper, the temporary attachment portion includes a projection protruding from the outer surface and a groove that opens on an end surface of the projection and extends straightly along the outer surface and, an end portion of which opens on an outer peripheral surface of the projection, the linkage member is provided with a groove that faces the groove when the linkage member is located at the predetermined position, and the stopper includes two inserting portions inserting into the respective grooves of the temporary attachment portion and the linkage member and a hook capable of lock/unlock with a portion disposed in either the temporary attachment portion or the linkage member.

According to this preferred air conditioner for a vehicle of the present invention, when the linkage member is temporarily attached at the predetermined position, the groove of the linkage member and the groove at the projection of the temporary attachment portion are located so as to face each other, and then the inserting portions of the stopper are inserted into the grooves, and finally the hook of the stopper is locked with the portion disposed in either the temporary attachment portion or the linkage member. Accordingly, the stopper can be prevent from being released and dropped, and also loose connection between them can be avoided if enough accuracy in dimension or size of the inserting portion and the grooves of the stopper is achieved. Meanwhile, when the linkage member is released from the temporary attachment, the stopper is pulled out by a worker with a certain force along the predetermined direction so that the hook is unlocked, and then the stopper is taken out of the grooves. That is, even if the distance between the outer surface of the case at which the linkage member is disposed and any equipments disposed side by side is short, the stopper can be pulled out with ease within narrow space. In this case, the direction of the grooves (the above predetermined direction) may be determined appropriately considering configuration of bosses protruding from the outer surface of the case and distances from equipments disposed so that the stopper can be pulled out easily.

Further, it is preferred that the present invention provides air conditioner of the above, wherein a damper is disposed in either case of the blower units or the air conditioning unit to control a stream of air to be conditioned or conditioned air, a linkage member for controlling the damper is disposed at outer surface of the either case, a temporary attachment portion is disposed so that the linkage member is temporarily attached to the outer surface at its predetermined position by installing a stopper, and the outer surface of the case where the linkage member is disposed extends in substantially perpendicular direction to the vehicle width direction.

According to this preferred air conditioner for a vehicle of the present invention, the pulling-out direction (the predetermined direction) of the stopper is substantially the perpendicular direction to the vehicle width direction, and therefore the stopper can be pulled out with ease within a space between the equipments even in a state in which the air conditioner is installed to the vehicle.

Further, it is preferred that the present invention provides air conditioner of the above, wherein a damper is disposed in either case of the blower units or the air conditioning unit to control a stream of air to be conditioned or conditioned air, a linkage member for controlling the damper is disposed at outer surface of the either case and at its side surface facing the other case, a temporary attachment portion is disposed so that the linkage member is temporarily attached to the outer surface at its predetermined position by installing a stopper, and the stopper is formed so that it can be removed from its inserted position into the temporary attachment portion in the vehicle longitudinal direction.

According to this preferred air conditioner for a vehicle of the present invention, the stopper can be removed between the blower unit and the air conditioning unit with ease even while the air conditioner is installed in the instrument panel of the vehicle and the space between the both units is small.

Further, it is preferred that the present invention provides air conditioner of the above, wherein the connecting potion is disposed at the both of the air conditioning unit and blower unit, the both units are connected by the connecting portion, a damper is disposed in a case of the blower units to control a stream of air to be conditioned, a linkage member for controlling the damper is disposed at outer surface of the case of the blower unit, a temporary attachment portion is disposed so that the linkage member is temporarily attached to the outer surface at its predetermined position by installing a stopper, and the outer surface of the case of the blower unit where the linkage member is disposed is a side surface located at the side of the air conditioning and extends in substantially perpendicular direction to the vehicle width direction.

According to this preferred air conditioner for a vehicle of the present invention, the pulling-out direction (the predetermined direction) of the stopper is substantially the perpendicular direction to the vehicle width direction, and therefore the stopper can be pulled out with ease within a space between the equipments even in a state in which the air conditioner is installed to the vehicle.

Further, it is preferred that the present invention provides air conditioner of the above, wherein the connecting potion is disposed at the both of the air conditioning unit and blower unit, the both units are connected by the connecting portion, a damper is disposed in either case of said blower units or the air conditioning unit to control a stream of air to be conditioned or conditioned air, a linkage member for controlling the damper is disposed at outer surface of the either case, a temporary attachment portion is disposed so that the linkage member is temporarily attached to the outer surface at its predetermined position by installing a stopper, the temporary attachment portion includes a projection protruding from the outer surface and a groove that opens on an end surface of the projection and extends straightly along the outer surface and, an end portion of which opens on an outer peripheral surface of the projection, the linkage member is provided with a groove that faces said groove when the linkage member is located at the predetermined position, and the stopper includes two inserting portions inserting into the respective grooves of the temporary attachment portion and the linkage member, a hook capable of lock/unlock with a portion disposed in either the temporary attachment portion or the linkage member, and middle extending portions extending outward from the both sides of the stopper between the two inserting portions and supported between an end surface of the projection and an opposite end surface facing closely the end surface of the projection.

According to this preferred air conditioner for a vehicle of the present invention, when the linkage member is temporarily attached at the predetermined position, the groove of the linkage member and the groove at the projection of the temporary attachment portion are located so as to face each other, and then the inserting portions of the stopper are inserted into the grooves, and finally the hook of the stopper is locked with the portion disposed in either the temporary attachment portion or the linkage member. Accordingly, the stopper can be prevent from being released and dropped, and also loose connection between them can be avoided if enough accuracy in dimension or size of the inserting portion and the grooves of the stopper is achieved. Meanwhile, when the linkage member is released from the temporary attachment, the stopper is pulled out by a worker with a certain force along the predetermined direction so that the hook is unlocked, and then the stopper is taken out of the grooves. That is, even if the distance between the outer surface of the case at which the linkage member is disposed and any equipments disposed side by side is short, the stopper can be pulled out with ease within narrow space. In this case, the direction of the grooves (the above predetermined direction) may be determined appropriately considering configuration of bosses protruding from the outer surface of the case and distances from equipments disposed so that the stopper can be pulled out easily. Further, the middle extending portions is supported between the end surface of the projection and the opposite end surface, and therefore loose connection can be more prevented and positioning of the temporary attachment becomes accurate.

Further, it is preferred that the present invention provides air conditioner of the above, wherein the connecting potion is disposed at the both of the air conditioning unit and blower unit, the both units are connected by the connecting portion, a damper is disposed in either case of the blower units or the air conditioning unit to control a stream of air to be conditioned or conditioned air, a linkage member for controlling the damper is disposed at outer surface of the either case, a temporary attachment portion is disposed so that the linkage member is temporarily attached to the outer surface at its predetermined position by installing a stopper, the temporary attachment portion includes a projection protruding from the outer surface and a groove that opens on an end surface of the projection and extends straightly along the outer surface and, an end portion of which opens on an outer peripheral surface of the projection, the linkage member is provided with a groove that faces said groove when the linkage member is located at the predetermined position, the stopper is a molding product made of a resin and includes two inserting portions inserting into the respective grooves of the temporary attachment portion and the linkage member, a hook capable of lock/unlock with a portion disposed in either the temporary attachment portion or the linkage member, one side of a side surface of the inserting portion of the stopper is a contacting surface with one side of inside surface of the groove of the linkage member or the temporary attachment portion, and on an opposite side to the contacting surface of the inserting portion, plural projection portions contacting with the other side of inside surface of the grooves and crossing each other are provided.

According to this preferred air conditioner for a vehicle of the present invention, the distance between the inserting portion and groove of the stopper can be small enough to avoid loose connection. That is, in general, a resin-molding product with a thick dimension has a surface-backing problem in molding and poor accuracy in shaping. However, just setting the thickness of the inserting portion of the stopper to a width of the groove may also cause a problem of loose connection or hard connection because of deviation of dimension of the parts. In the present invention, however, whole side surface of one side of the inserting portion of the resin stopper is a contacting surface with the groove, and on opposite side plural projection portions are provided. Therefore, the thickness of the inserting portion can be smaller to avoid deviation of its dimension maintaining necessary thickness of the inserting portion that is equivalent to the width of the groove. Further, plural projection portions are provided in such a manner that they cross each other, and therefore this can provide stable contact between the projection portions and inside surface of the groove resulting in little loose connection.

Further, it is preferred that the present invention provides air conditioner of the above, further comprising a pipe member extending forward of the vehicle through a hole formed at a dash panel of the vehicle, and a guide member extending forward of the vehicle for guiding the pipe member to the hole.

According to this preferred air conditioner for a vehicle of the present invention, installment of the instrument panel by utilizing conventional production equipments can be achieved. That is, in general, when an instrument panel with an air conditioner is installed in a vehicle body on a vehicle assembly line, pipe member (cooling pipe, heater pipe) of the air conditioner needs to be inserted through a hole disposed at a dash panel. However, auto assembly robots for the instrument panel do not work with such precise operations. Therefore, there may be some possibility that the pipe gets damage through contacting the hole in its installment by the robots. In the present invention, however, the guide member for guiding the pipe into the hole is provided in the air conditioner, and therefore inserting of the pipe into the hole can be conducted certainly by such robots resulting in avoidance of pipe's damage. Accordingly, conventional installment by the robots can be conducted.

Further, it is preferred that the present invention provides method for attaching an air conditioner for a vehicle including an air conditioning unit for providing conditioned air by a heat exchanger and a blower unit for supplying an air to be conditioned to the air conditioning unit, the air conditioner is disposed in an instrument panel of the vehicle, the method comprising a step of sub-assembly in which respective upper portions of the air conditioning unit and the blower unit are attached to an instrument panel member that extends in the vehicle width direction and is disposed in the instrument panel, out side of the vehicle, and a step of vehicle body assembly in which the sub-assembled instrument panel is carried in a vehicle body and attached to the vehicle body after the step of sub-assembly, wherein the step of sub-assembly comprises a step of unit attachment in which the air conditioning unit and the blower unit are respectively attached to the instrument panel member, a step of coupling in which an air vent of the blower unit and an air intake of the air conditioning unit are coupled during or after the step of unit attachment, and a step of connection in which connecting portions disposed respectively at the air conditioning unit and the blower unit are interconnected during or after the step of unit attachment.

According to this preferred method for attaching air conditioner for a vehicle of the present invention, the air conditioner and the instrument panel can be assembled with ease on the sub-assembly line. Then, the sub-assembly is installed to the vehicle body on the vehicle assembly line. Therefore, assembly works on the vehicle assembly line can be reduced. The whole vehicle assembly can be simple and air conditioner assembly can be easy as well. Further, stiffness of whole instrument panel can improve with ease by connecting the air conditioning unit and the blower unit or attaching either one of the units to the vehicle body.

Further the units are attached to the instrument panel one by one, and therefore the attachment works can be easy because a weight of the unit to be attached is not so heavy. Further, attachment stiffness of the both units can improve by interconnecting the connecting portions.

Further, it is preferred that the present invention provides method for attaching air conditioner of the above, wherein the step of unit attachment is a step in which at first the air conditioning unit is attached to the instrument panel member, and then the blower unit is attached to the instrument panel member, and the step of connection is a step in which when the blower unit is attached to the instrument panel member in the step of unit attachment, the connecting portion of the blower unit is connected to the connecting portion of the air conditioning unit.

According to this preferred method for attaching air conditioner for a vehicle of the present invention, at first relatively heavy air conditioning unit is attached to the instrument panel member securely, and then the blower unit is attached to the air conditioner unit and the instrument panel member. In this case, the blower unit can be attached to the predetermined position easily and accurately by interconnecting the connecting portions disposed at the both units.

Further, it is preferred that the present invention provides method for attaching air conditioner of the above, wherein either one of the connecting portions of the air conditioning unit and the blower unit is a projection and the other one of the connecting portions is a hole, the projection is provided with a hook at its end that is inserted into the hole and locked in there, and the connection of the connecting portions of the air conditioning unit and the blower unit is achieved by inserting said projection into the hole with lock of the hook in the step of connection.

According to this preferred method for attaching air conditioner for a vehicle of the present invention, when attaching the blower unit, the blower unit can be attached temporarily by inserting the projection extending from either the air conditioning unit or the blower into the hole with lock of the hook in the hole. Further, for example, when the blower unit is attached to the instrument panel member with the instrument panel up side down, temporary attachment of the blower can be achieved just by sliding the blower unit to the air conditioning unit over the instrument panel member.

Further, it is preferred that the present invention provides method for attaching air conditioner of the above, wherein the air conditioner for a vehicle comprises a pipe member extending forward of the vehicle through a hole formed at a dash panel of the vehicle and a guide member extending forward of the vehicle thorough a guide hole for guiding the pipe member to the hole, and when the instrument panel is attached to the vehicle body in the step of vehicle body assembly, the guide member is inserted into the guide hole so that the pipe member passes through the hole.

According to this preferred method for attaching air conditioner for a vehicle of the present invention, installment of the instrument panel by utilizing conventional production equipments can be achieved as described above in detail.

### BRIEF DESCRIPTION OF THE DRAWINGS

FIG. **1** is a perspective view of an instrument panel showing a disposition sate of an air conditioner for a vehicle in the first embodiment of the present invention.

FIG. **2** is a plan view, seeing from the lower side of the vehicle, of the instrument panel to which the above air conditioner is attached.

FIG. **3** is a perspective view, seeing from the front side, of the instrument panel of FIG. **2**.

FIG. **4** is a view that is equivalent to FIG. **3**, showing attached state of an air conditioning unit of the above air conditioner.

FIG. **5** is a side view, seeing from the left side of the vehicle, showing a right-side case and its internal structure of the above air conditioning unit.

FIG. **6** is a plan view, seeing from the upper side of the vehicle, of the above air conditioning unit.

FIG. **7** is an enlarged view showing a temporary attachment structure of a blower unit of the above air conditioner.

FIG. **8** is a perspective view showing an attached state of the above air conditioner to an instrument panel member and a vehicle body.

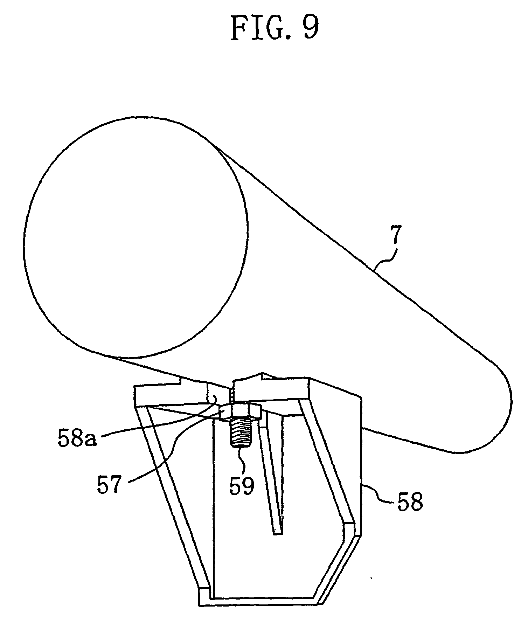

FIG. **9** is an enlarged perspective view showing attached state of an attachment portion of the blower unit of the above air conditioner to the instrument panel member.

FIG. **10** is a perspective view, seeing from the left-upper side, showing an external view of an air conditioner in the second embodiment of the present invention.

FIG. **11** is a longitudinal section showing an internal structure of an air conditioning unit of the air conditioner in the second embodiment.

FIG. **12** is a perspective view, seeing from the left side of the vehicle, of a blower unit of the air conditioner in the second embodiment.

FIG. **13** is a perspective view, seeing from the right-lower side of the vehicle, of the blower unit of the air conditioner in the second embodiment.

FIG. **14** is an enlarged view showing a temporary attachment structure of a linkage member of the blower unit by a stopper in the second embodiment.

FIG. **15A** is a plan view of the above linkage member, FIG. **15B** is a side view of the above linkage member, and FIG. **15 C** is a bottom plan view of the above linkage member.

FIG. **16A** is a side view of a stopper of the air conditioner in the second embodiment, FIG. **16B** is a plan view of the above stopper, and FIG. **16C** is a elevation of the above stopper.

### DETAILED DESCRIPTION OF THE INVENTION

Hereinafter, preferred embodiments of the present invention will be described with reference to drawings.

### EMBODIMENT 1

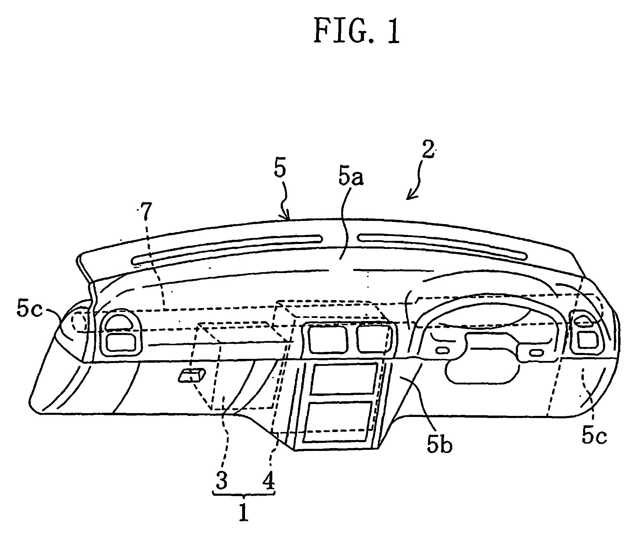

Firstly, referring to FIG. **1**, an air conditioner **1** for a vehicle and an instrument panel **2** in which the air conditioner **1** is disposed in the first embodiment of the present invention will be described.

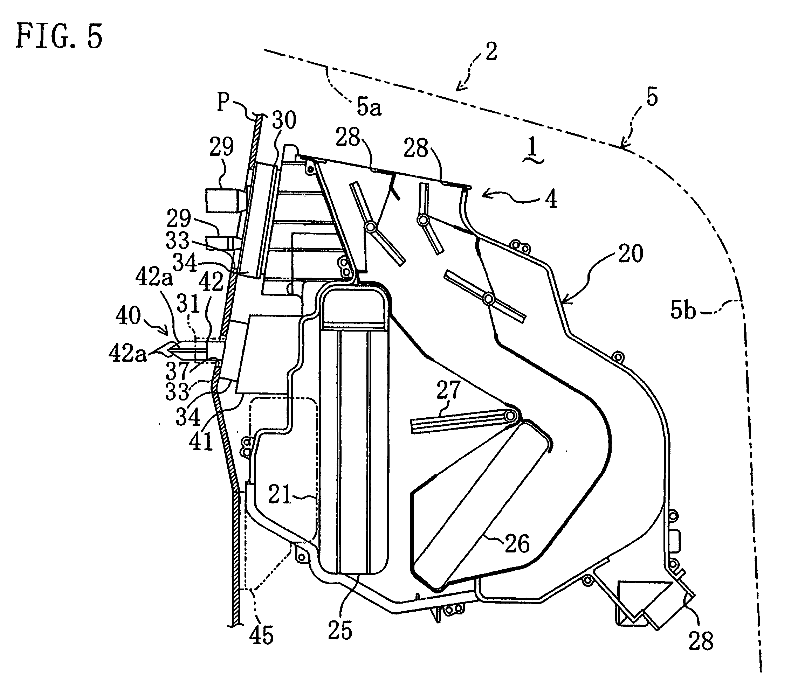

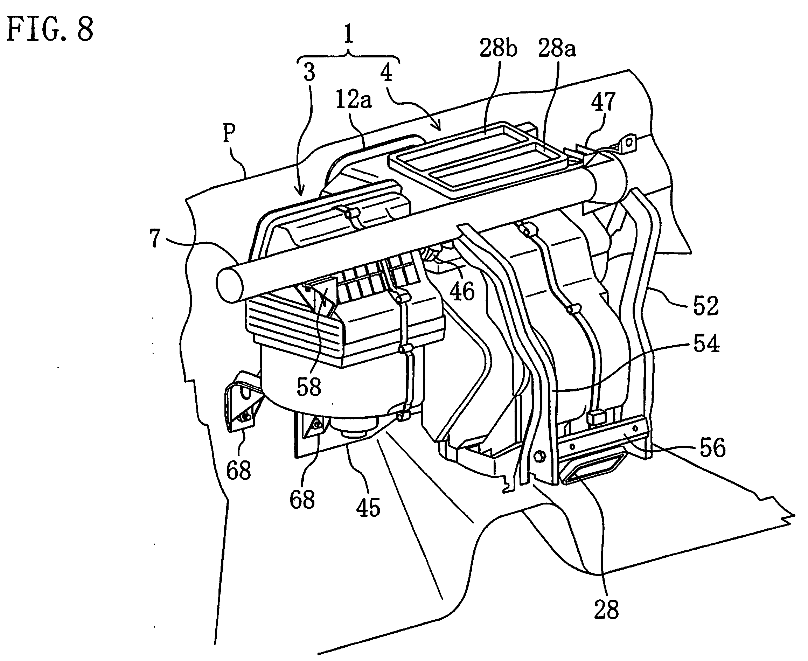

The air conditioner **1** is disposed between a steel dash panel **P** (FIG. **5** and FIG. **8**) partitioning an engine room located at a vehicle front from a vehicle compartment and the instrument panel **2**, that is, inside in the instrument panel **2**. The air conditioner **1** comprises a blower unit **3** disposed at left-side of the vehicle and an air conditioning unit **4** that supplies a conditioned air to the vehicle compartment after cooling air from the blower unit **3.** In the process of manufacturing the vehicle, the air conditioner **1** is installed to the instrument panel **2** on a sub-assembly line of the vehicle, and then the instrument panel **2** is installed to a vehicle body on a vehicle assembly line. The detail will be described later.

The instrument panel **2** comprises, as a whole, a main body **5** including a upper wall **5a** extending toward a passenger side from a bottom end of a window shield and a vertical wall **5b** extending downward from both rear sides of the upper wall **5a.** Under the upper wall **5a** of the instrument panel **5,** an instrument panel member **7** to support the main body **5** of the instrument panel against the vehicle body is disposed. That is, the instrument panel main body **5** is provided with a pair of side walls **5c** at both sides thereof that extends downward substantially in a perpendicular direction from an under surface of the upper wall **5a.** The instrument panel member **7** extends substantially in a horizontal direction so that it connects both middle portions of the pair of side walls **5c, 5c.** The instrument panel member **7** is formed like a pipe that has a relatively bigger size at its portion located in front of a driver-seat, and it is fastened to the vehicle body.

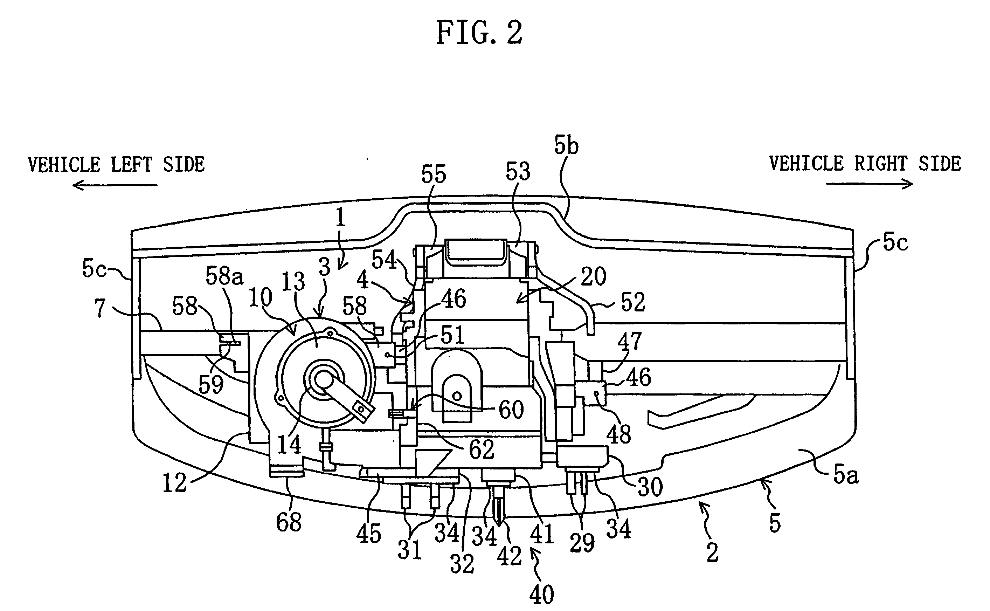

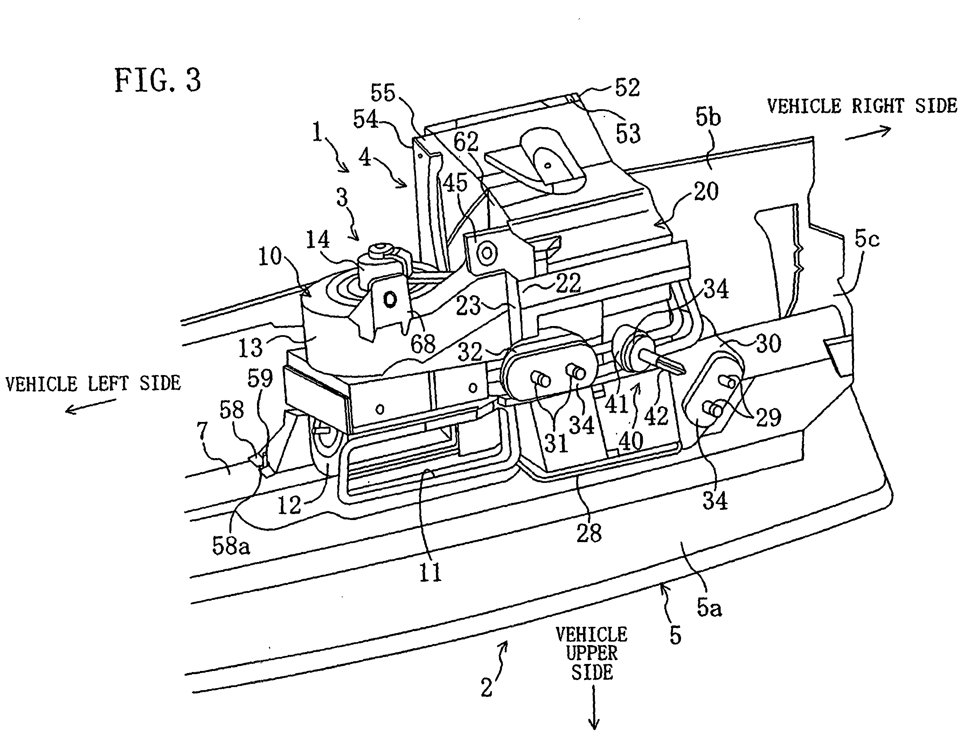

As shown in FIG. **2** and FIG. **3**, the blower unit **3** of the air conditioner **1** comprises a case **10** that is made of a resin injection molding. The case **10** is provided with an air inlet **12** including an outside air intake **11** and an inside air intake **17** at its upper side and an air blowing portion **13** supplying an introduced air from the air inlet **12** to the air conditioning unit **4** at its lower side. The air blowing portion **13** includes a centrifugal multi-blade fan (not shown) with its rotational axis disposed in a vertical direction, and a fan driving actuator **14** is disposed under the fan. Air from the air blowing portion **13** is supplied to the air conditioning unit **4** through an air vent (not shown) with a rectangular shape formed at front side of a right-side wall of the case **10.**

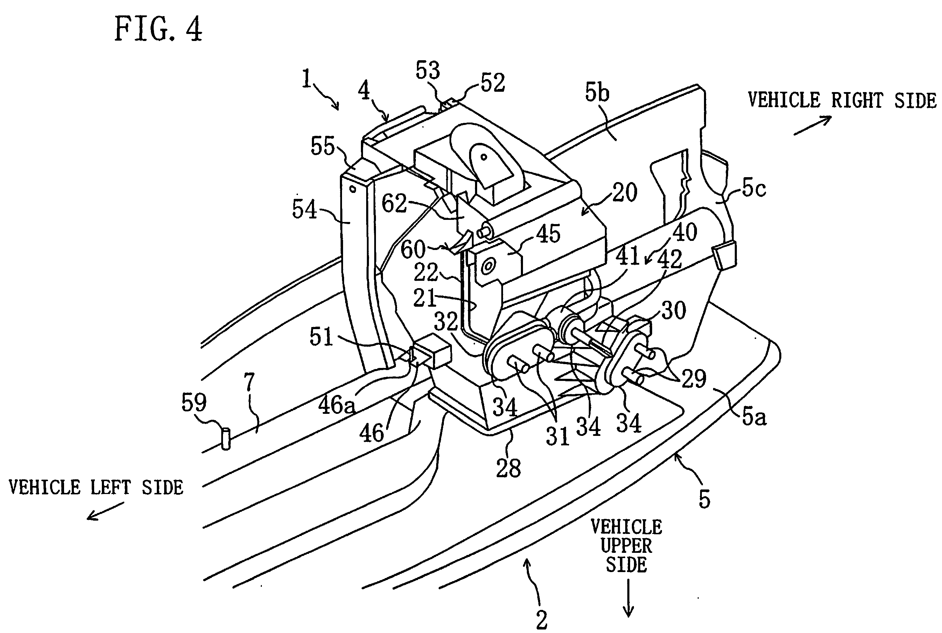

As shown in FIG. **4**, the air conditioning unit **4** includes a case **20** made of resin with a long, as a whole, in perpendicular direction and rectangular box-shape that is bigger than the blower unit **3.** The case **20** consists of two split cases and is provided with an air intake **21** at a portion of its left-side wall that faces to the air vent of the blower unit **3.** Herein, a case **20** may be applied that consists of three or more split cases. The case **20** includes a peripheral wall **22** extending from a peripheral portion of the air intake **21** toward the blower unit **3**, and a connecting wall **23** extends from a peripheral portion of the air vent of the blower unit **3**. The connecting wall **23** is formed in such a manner that the wall **23** extends into an inside of the peripheral wall **22** of the air conditioning unit **4**. The peripheral wall **22** and the connecting wall **23** form an air induction passage.

As shown in FIG. **5**, an evaporator **25** (heat exchanger for cooling air), as one of elements consisting of a refrigerant cycle, is disposed at a rear side of vehicle from the air intake **21** of the unit **4** in such a manner that its face extends substantially in a perpendicular direction. Further, a heater core **26** (heat exchanger for warming air) is disposed at a rear side of vehicle from the evaporator **25** in such a manner that its upper side is positioned rearward with its inclined position. Air introduced from the air intake **21** flows through the evaporator **25,** and then the air is conditioned by air mixing damper **27** through the heater core **26.** The conditioned air is supplied to upper portion in the vehicle compartment through a vent **28** formed at upper end of the case **20** and to rear-seat portion in the vehicle compartment through a vent **28** formed at lower end of the case **20,** respectively.

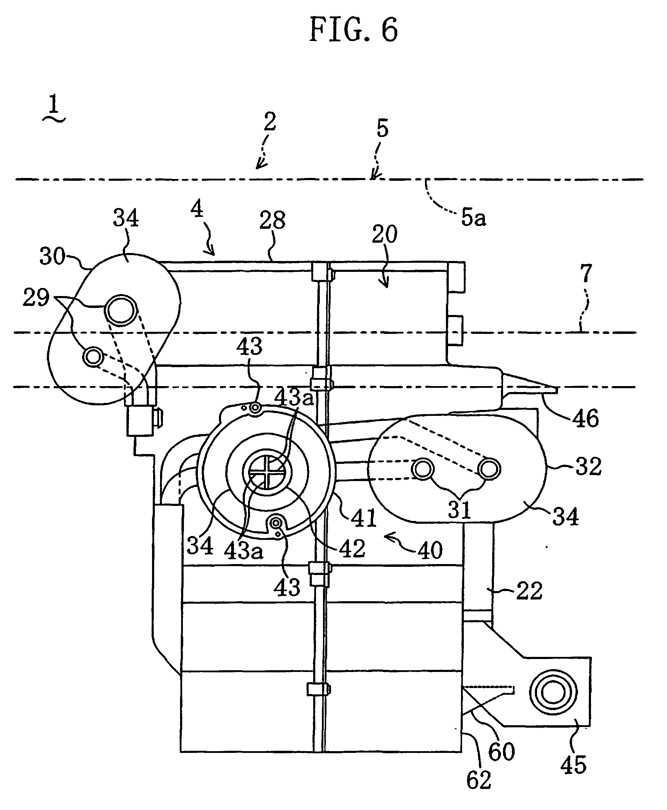

At right side of vehicle, inflow/outflow tanks for a refrigerant (not shown) are disposed, and cooling pipe **29, 29** (pipe member) are connected to the tanks. The cooling pipe **29** extends, as shown FIG. **6**, penetrating a right-side wall of the case **20**, curving upward and then turning at a portion near the upper end of the case **20** to the front of vehicle. A front end of the cooling pipe **29** is supported through a supporting bracket **30** integrated to the front wall of the case **20.**

Meanwhile, a pair of heating pipes **31, 31** (pipe member) is connected to the heater core **26.** The pipe **31** extends penetrating the right-side wall of the case **20,** turning around the front wall of the case **20**, extending to a portion near the left-side end of the front wall portion, and then curving toward the front of vehicle. Likewise, a front end of the heating pipe **31** is supported through a supporting bracket **32** integrated to a center portion of the front wall of the case **20**.

The cooling pipe **29** and the heating pipe **31** extend, as shown in FIG. **2**, beyond front ends of the bracket **30, 32** by a certain length respectively, and then extend into the engine room passing through penetration holes **33, 33** formed at the dash panel **P** (FIG. **5**), and finally connecting to pipes (not shown) disposed in the engine room. Surfaces of front ends of the brackets **30, 32** are formed so as to match the dash panel **P**, and a seal **34** are attached thereto.

A guide member **40** is disposed between the both supporting brackets **30, 32** of the case **20** of the air conditioning unit **4**, which is inserted into a guide hole **37** (FIG. **5**) that is formed at the dash panel **P** to guide the air conditioner **1** to a certain position. The guide member **40** comprises a boss **41** with like a cylinder shape formed at the front wall of the air conditioning unit **4** and a pin **42** with a small-size cylinder shape extending forward from the center of the boss **40** in a substantially horizontal direction. Front surface of the boss **41** is formed so as to match the dash panel **P**, and its upper end and lower end are respectively fixed to the front wall of the case **20** by screw **43, 43,** respectively (FIG. **6**). The pin **42** extends forward beyond the pipe **29, 31**, and is provided with projections **42a,** **42a** disposed at end portion of the pin **42** that extend outward with rectangular cross section respectively. Each projection **42a** is formed with a taper shape in such a manner that a diameter of its end portion decreases gradually. Similar seal **34** is attached to a surface of the boss **41** like the supporting bracket **30, 32.**

The air conditioning unit case **20** is provided with a connecting portion **45** (third connecting portion) to fix the case **20** at the dash panel **P**. The connecting portion **45** is formed with a plate shape that extends from a lower end of the front wall toward a left side, and it includes an attaching hole for receiving a stud bolt (not shown) formed at the center of the dash panel **P**.

Now, attaching structure will be described for the air conditioning unit **4** to the instrument panel **2**. Upper end and lower end of the air conditioning unit **4** are fixed to the instrument panel member **7** and stay **52, 54**, respectively. That is, a pair of flanges **46, 46** (first connecting portion) is attached at the upper end of the air conditioning unit **4** that extends outward from both side walls substantially in a horizontal direction, respectively. A right-side flange **46** is located at a little forward position from the instrument panel member **7**, and the flange **46** is attached to a supporting bracket **47** extending forward from the member **7.** The right-side flange **46** is provided with an attaching hole at its center portion, and the supporting bracket **47** for the air conditioning unit is provided with a bolt **48** protruding downward.

The left-side flange **46** of the air conditioning unit **4** is located in such a manner that the flange **46** overlaps the instrument panel member **7** when seeing from the lower side of the vehicle, and its overlapped portion of the instrument panel member **7** with the flange **46** is formed as a supporting portion for the air conditioning unit. The left-side flange **46** is provided with a notch **46a** at its center portion in the vehicle length direction as shown in FIG. **4**. A bolt **51** protruding downward to the notch **46a** is placed at the supporting portion for the air conditioning unit.

At a portion near the attaching portion of the supporting bracket **47** at the instrument panel member **7**, a right-side stay **52** extending downward to a lower end of the air conditioning unit **4** is disposed. A lower end of the right-side wall of the air conditioning unit **4** is provided with a fixing portion **53** (lower connecting portion) attached by a lower portion of the stay **52**. Meanwhile, at a portion near air conditioning unit supporting portion of the instrument panel member **7**, a left-side stay **54** is disposed, and it is attached to a fixing portion **55** (lower connecting portion) of lower end of left-side wall of the air conditioning unit **4**. Each fixing portion **53, 55** of the air conditioning unit **4** is provided with nuts (not shown) that are located at a portion of attaching holes formed so as to penetrate in the vehicle width direction at lower end of each stay **52, 54.** Both stays **52, 54** are connected by a connecting member **56**.

Next, attaching structure of the blower unit **3** to the instrument panel **2** will be described. The blower unit **3** is attached to the instrument panel member **7** at its both sides near the air intake **12** located at upper side of the vehicle body, and it is attached to the air conditioning unit **4** at its lower portion near the air vent.

Firstly, attaching structure near the air intake **12** will be described. The case **10** of the blower unit **3** comprises a pair of connecting pieces (second connecting portion) **58, 58** extending outward in a substantially horizontal direction from its both side walls. A right-side connecting piece **58** is located to overlap the left-side flange **46** of the air conditioning unit **4**. A left-side connecting piece **58** is located to overlap the instrument panel member **7** when seeing from the lower side, and this overlapped portion of the instrument panel member **7** with the left-side connecting piece **58** is formed as a supporting portion for the blower unit. An attaching face of the left-side connecting piece **58** to the instrument panel member **7** has a configuration that is equivalent to outer shape of the instrument panel member **7** when seeing from the vehicle width direction. It forms an attaching portion for the blower unit **3** to the instrument panel member **7**.

The right-side connecting piece **58** of the blower unit **3** is provided with an attaching hole at its center portion, and a bolt **51** at the air conditioning unit supporting portion of the instrument panel member **7** is provided to be inserted into the hole. Meanwhile, the left-side connecting piece **58** is provided with a notch **58a** similar to the left-side flange **46** of the air conditioning unit **4**. A bolt **59** is disposed for the notch **58a,** and the bolt **59** is fasted to the connecting piece **58** by a nut **57.** A surface of the connecting piece **58** to receive the instrument panel member **7** has a configuration of an arc shape when seeing from the vehicle width direction to match outer surface of the instrument panel member **7**.

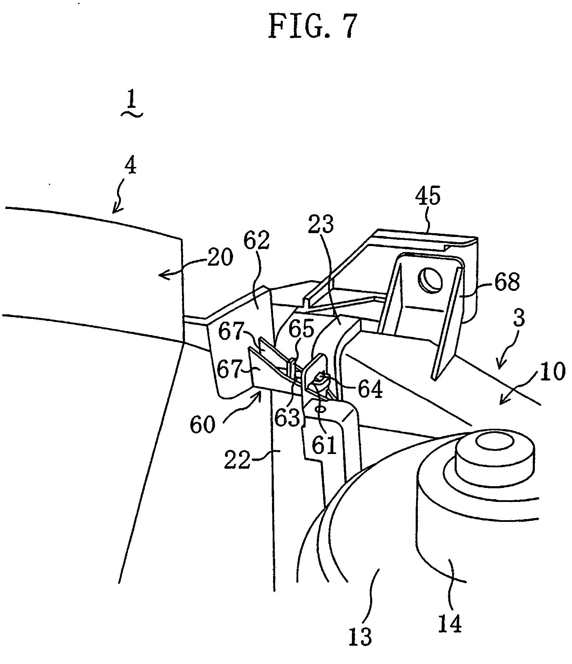

Meanwhile, attaching structure near the air vent of the blower unit **3** is formed to provide a temporary fixation of the blower unit **3** to the instrument panel **2**. As shown in FIG. **7**, the structure comprises a projection **60** extending toward the blower unit **3** substantially in a horizontal direction from the left-side wall of the case **20** and a hole **61** formed at the blower unit **3** to receive the projection **60** therein. A base portion of the projection **60** is connected a vertical wall **62** disposed at lower end portion of the peripheral wall **22** of the air vent. The projection **60** includes a slit extending from its front side to base portion side and rear side.

That is, at a center portion **63** of the projection **60**, only its front end is connected to its peripheral portion, and therefore base end portion of the center portion **63** can bend upward and downward with its elasticity. Further, at a portion near blower unit side of the center portion (bending portion) **63** of the projection **60** is provided with a projection (hook) **64** protruding downward from a lower surface of the center portion (bending portion) **63**. The projection **64** includes a vertical surface at a side of the air conditioning unit and a slant surface at a side of the blower unit **3**. Further, the center portion (bending portion) **63** is provided with a vertical portion **65** extending downward from a portion that is away from the projection **64** toward the base side.

The projection **60** is provided with a pair of ribs **67, 67** extending downward from its edge portion at its front side and rear side, respectively. A portion of the rib **67, 67** located at a side of the blower unit **3** is positioned away from the projection **64** by a certain distance, and at this portion the ribs extend downward further. An end of the rib at the side of air conditioning unit **4** is connected to the vertical wall **62**. A distance between the rib **67, 67** and the projection **64** is equivalent to a thickness of the vertical wall. When inserting the projection **60** into the hole **61**, the center portion (bending portion) **63** is bended upward by pushing up the slant surface of the projection **64** by peripheral portion of the hole **61,** and the hole **61** climes over the projection **64** resulting in a normal state of the center portion (bending portion) **63.**

In this state, a side portion of the hole **61** that is located at the side of the blower unit **3** contacts to the projection **64,** and therefore it does not disconnect. Further, a side portion of the hole **61** that is located at the side of the air conditioning unit **4** is limited by the ribs **67, 67,** and therefore it also provides a function of position limitation in a direction of insertion. Additionally, since the hole **61** has corresponding configurations to cross sections of the projection **60,** the blower unit **3** is limited appropriately in the vehicle length direction and in the vertical direction. On the other hand, in order to release a connection between the projection **64** and the hole **61**, the projection **64** is moved by pushing down the vertical portion **65** of the center portion (bending portion) **63.** Then, the projection **64** can be pulled out.

The blower unit case **10** is provided with a connecting leg (third connecting portion) **68** with a plate shape that extends downward at its lower end. The connecting leg **68** is attached to the dash panel **P** directly, like the connecting portion **45** for the air conditioning unit **4.** A right-side connecting leg **68** with the connecting portion **45** is fixed to the dash panel **P**.

Next, assembly process of the air conditioner **1** and the instrument panel **2** to the vehicle body in the first embodiment will be described. Firstly, as shown in FIG. **4**, on a sub-assembly line, the instrument panel **2** is positioned upside down so that its upper wall **5a** is located downward, and then the air conditioning unit **4** is installed from the upper side. In this case, when the left and right connecting flanges **46, 46** are positioned upon the air conditioning unit supporting portion of the instrument panel member **7** and the supporting bracket **47** for air conditioning unit respectively, the fixing portions **53, 55** of the air conditioning unit **4** and the attaching holes of the stays **52, 54** are overlapped seeing from the vehicle width direction. In the state, the right-side flange **46** of the air conditioning unit **4** is fixed to the instrument panel member **7** by applying the nut to the bolt **51** of the air conditioning unit supporting portion. On the other hand, the fixing portions **53, 55** are fixed to the instrument panel member **7** by inserting bolt into the attaching holes of the stays **52, 54** with applying nuts.

As described above, the upper portion of the air conditioning unit **4** is fixed to the instrument panel member **7**, while the lower portion of the air conditioning unit **4** is fixed to lower end of the stay **52.** As a result, the air conditioning unit **4** with box shape is supported to the instrument panel member **7** securely.

After that, as shown FIG. **3**, the blower unit **3** is installed from the upper side of the instrument panel **2**. In this case, while the connecting wall **23** of the blower unit **3** is inserted to the peripheral wall **22** of the air intake **21** of the air conditioning unit **4**, the right and left connecting pieces **58, 58** are overlapped with the blower unit supporting portion of the instrument panel member **7** and the left-side flange **46** of the air conditioning unit **4**. Then, the blower unit **3** positioned on the instrument panel member **7** is slid toward the air conditioning unit **4**, and the projection **60** is inserted into the hole **61.** Herein, the blower unit **3** is attached temporally to the air conditioning unit **4** and the instrument panel member **7.** During the operation, the projection **60** and holes **61** are located at lower portion of the vehicle, that is, those are positioned at upper side on the assembly line where it may be easy for workers to see. As a result, that provides an easy temporally attaching operation. Additionally, the relatively big and heavy air conditioning unit **4** has been fixed securely to the instrument panel member **7**, and therefore it provides a secure temporal attachment of the blower **3** to the air conditioning unit **4** and the instrument panel member **7**. Accordingly, in this state, the blower unit **3** can be fixed at predetermined position by applying nuts to the bolt **51** and **59** respectively, without any support of the blower unit **3** by workers.

The sub-assembled instrument panel **2** as described above is installed in the vehicle body through a door opening (not shown) by assembly robots on vehicle assembly line. In this case, conventionally, the robots just put the instrument panel **2** at a predetermined position, and therefore there may be no problem even if slight position deference occurs. In the first embodiment, however, the air conditioner **1** may be carried into the vehicle body with the instrument panel member **7** hanging. Accordingly, it is necessary to fix the air conditioner **1** to the instrument panel member **7** securely without any position deference. In the present invention, as described above, the air conditioning unit **4** and the blower unit **3** are fixed to the instrument panel member **7,** having an interconnection between the both units **3, 4.** Therefore, any occurrence of the position deference can be avoided resulting in an appropriate assembly.

Meanwhile, it may be necessary to insert the cooling pipe **29** and the heating pipe **31** into the penetration holes **33** without any contact with the dash panel **P**. Because those pipes are made of aluminum and so it may be easy to be damaged. However, the air conditioner **1** along with the instrument panel **2** is heavy and so it may be easy to bend. Accordingly, it is considerably difficult to insert the pipes **29, 31** into the holes with accuracy.

The above problem can be resolved by the guide member **40** disposed at the air conditioning unit **4** in the first embodiment. That is, the dash panel **P** is provided with the guide hole **37** receiving the pin **42** of the guide member **40.** Firstly, the instrument panel **2** is carried in the vehicle body by the assembly robot, and an end of the pin **42** is positioned at a portion near a right side of vehicle of the guide hole **37.** Then, the instrument panel **2** further approaches to the dash panel **P**, and the pin **42** comes into the guide hole **37,** thereby the instrument panel **P** is guided into a direction of extension of the pin **42**.

Herein, even if there is a deference of insertion direction of the pin **42** to the guide **37** before its insertion, the panel **2** is guided by the tapered end of the pin **42**. Further, since the end of the pin **42** extends beyond the pipes **29, 31** forward, the pipe **29, 31** can be guided appropriately after providing accurate positioning by the pin **42** against the guide **37.** As a result, conventional production equipment may provide an appropriate installment without any damage of the pipe **29, 31.** At the same time, the attaching holes of the connecting portions **45, 68** are inserted by the stud bolts formed at the dash panel **P**. Then, when the pipes **29, 31** are inserted perfectly, the seals **34, 34** of the pipe supporting brackets **30, 32** contacts with the dash panel **P**, and the connecting portions **45, 68** are fixed resulting in a direct attachment of the air conditioner **1** to the vehicle body. On the other hand, other predetermined portions of the instrument panel **2** are fixed to vehicle body by fastening members.

In the first embodiment, firstly the instrument panel **2** is fixed to the air conditioner **1** on sub-assembly line, and then the instrument panel **2** is fixed to the vehicle body on vehicle assembly line. Accordingly, assembly works and work loads on the vehicle assembly line can be reduced, and assembly works for assembling the air conditioner **1** can be made simple as well.

Further, since the air conditioning unit **4** is provided with the guide member for positioning the cooling pipe **29** and the heating pipe **31** at a predetermined position, the pipes **29, 31** can be inserted into the penetration holes **33** at the dash panel **P** accurately. This may make the penetration holes **33, 33** small resulting in high seal performance from the engine room and a noise reduction. Further, the guide member **40** makes appropriate positioning of the instrument panel **2** in sub-assembly state, and therefore it can be done to achieve easy fixation of the air conditioner **1** to the dash panel **2** and main body **5** of the instrument panel and the instrument panel member **7** to the vehicle body.

In the first embodiment, attaching the right connecting piece **58** along with the connecting flange **46** of the air conditioning unit **4** to the vehicle body can provide secure attachment thereof. However, this may cause more complicated works. That is, the air conditioning unit **4** is attached to the instrument panel member **7**, and then the blower unit **3** is attached to the instrument panel member **7**. Accordingly, in order to attach the right connecting piece **58** along with the connecting flange **46** of the air conditioning unit **4** to the vehicle body, such installment work need to be done within a small space between them, after positioning the air conditioning unit **4** and the blower unit **3** at a predetermined position. Therefore, only the connecting flange **46** may be attached without the right connecting piece **58** of the blower unit **3**. In this case, prior to positioning the blower unit **3**, the connecting flange **46** can be attached with simple works during attaching the air conditioner **4** to the instrument panel member **7**.

In the first embodiment, the independent guide member **40** is provided. Instead of this member, a cap like the pin **42** may be applied at end of the cooling pipe **29** or the heating pipe **31** so that the cap functions as a protecting member of the end of the pipes and as a guide member for an insertion to the dash panel **P**. In this case, the penetration hole **33** functions as a guide hole.

Additionally, the first connecting portion (connecting flange **46**) may be disposed not only at both side walls of the air conditioning unit **4** but at any upper portion of the air conditioning unit **4**, and further comprises not only two pieces but pieces of other number. Likewise, the second connecting portion (connecting piece **58**) may be disposed not only at both side walls of the blower unit **3** but at any upper portion of the blower unit **3**, and further comprises not only two pieces but pieces of other number.

Further, member fixing portion attached to the instrument panel member **7** directly may be disposed not only at the blower unit **3** but at the air conditioning unit **4** or both units, and further comprises not only one piece but more pieces.

Further, connecting portion of the both units may be disposed at not only their lower portion but any other places. However, it may be appropriate that they are disposed at the lower portion of both units from view point of balance of position of the first and second connecting portions. Especially, the first connecting portion (or the second connecting portion), the lower connecting portion and the attaching portion are disposed appropriately in such a manner that those are located at vertex of a triangle respectively seeing from the vehicle width direction.

### EMBODIMENT 2

The second embodiment of the present invention will be described.

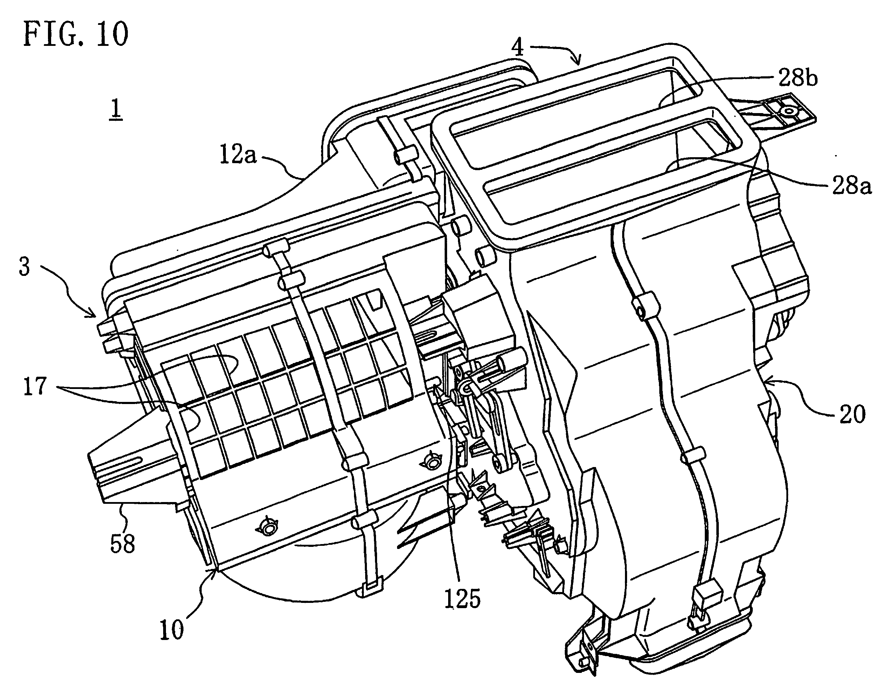

The FIG. **10** shows an external view of an air conditioner for a vehicle in the second embodiment. The description about the same portions as those in the first embodiment will be omitted herein.

The deferent point in the present embodiment from the first embodiment is as follows. While the blower unit **3** is provided with the connecting piece **58** at its both sides in the first embodiment, in the second embodiment such connecting pieces **58** is not provided. A damper **9** to control a conditioned air is disposed in the case **10** of the blower unit **3**, and a linkage member **125** to drive the damper **9** is disposed on an outer surface of the case **10**. Further, a temporary attachment portion **136** is disposed in which the linkage member **125** is temporarily attached to the outer surface of the case **10** by a stopper **137** at its predetermined position. Its detailed structure will be described later.

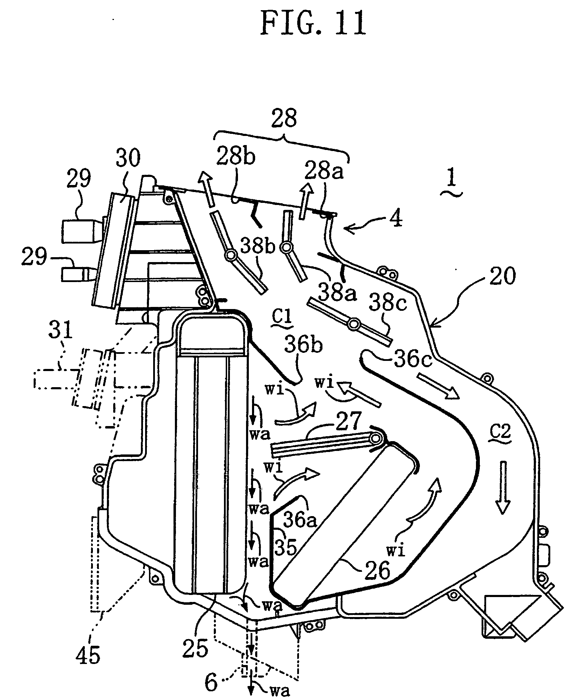

Streams of drain and air in the air conditioning unit **4** will be described in the second embodiment, in which this is the same as in the first embodiment. A condensed vapor water occurring at the evaporator **25** flows down, as shown by an arrow: wa in FIG. **11,** along its tubes, and further drops from a lower portion of the evaporator **25** to a drain pan located at the bottom below the case **20.** Finally, it goes out through a drain pipe **6**.

A air mixing damper **27** is disposed between the evaporator **25** and the heater core **26** that divides the air coming down through the evaporator **25** to the heater core **26** and/or the air mixing passage **C1,** and the damper **27** also controls its division rate to adjust a temperature of the conditioned air. That is, as shown in the figure, down steam of the evaporator **25** is partitioned by a partition wall **35** integrated to an inside of the case **20,** and openings **36a, 36b** formed at the partition wall **35** are open or closed by the air mixing damper **27**. The damper **27** is provided with an axis extending in the vehicle width direction, both ends of which are supported to the casing rotationally. One end of the damper axis projects outward penetrating through side wall of the case **20**, and it is coupled to a linkage (not shown) disposed at outer surface of the case **20.**

When the damper **7** opens the opening **36a** of the partition **35** and closes the opening **36b,** whole air coming through the evaporator **25** is directed to the heater core **26.** Meanwhile, when the damper is rotated by the linkage mechanism and the opening **36 a** is closed with the opening **36b** wide-opened, whole air coming thorough the evaporator **25** bypasses the heater core **26** and flows toward the air mixing passage **C1** located downstream.

When the damper **27** is located at its middle position, air stream is divided into separately toward the heater core **26** and the sir mixing passage **C1,** according to a damper position, as shown by an arrow : wi. The both streams joins at downstream resulting in sufficient mixing of cooled air from the evaporator **25** and warm air from the heater core **26.** Air flowing in upper side over the air mixing passage **C1** is supplied to vents **28, 28** (not shown) formed at upper portion of the case **20**, and it flows toward upper portion in the vehicle compartment. The air is also supplied through the passage **C2** downstream partitioned in the case **20** and flows toward lower portion in the vehicle compartment.

That is, the case **20** of the air conditioning unit **4** is provided with a vent **28a** opened at its upper surface, while the case **20** is provided with a defrost vent **28b** opened at its upper surface. Additionally, vent switching dampers **38a, 38b** are disposed at vents **28a, 28b** to change a flow direction of the conditioned air, respectively. Another vent switching damper **38c** is disposed at an opening **36c** connecting the air mixing passage **C1** and the downstream passage **C2** to open or close the opening **36c.** The dampers **38a, 38b, 38c** are driven by the linkage mechanism (not shown) disposed at side wall of the case **20,** like the damper **27.**

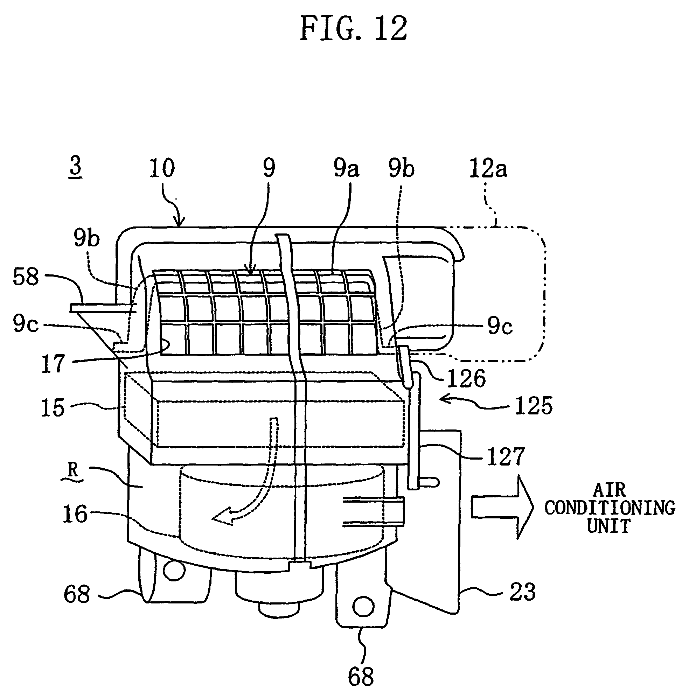

Meanwhile, the case **10** of the blower unit **3** comprises two pieces that are split at the center portion thereof in the vehicle width direction, like the case **20** of the air conditioning unit **4.** In the case **10,** an air filter **15** for filtering air is disposed at a substantially center portion in a vertical direction, as shown in phantom line of the FIG. **12.** The filter extending in a substantially horizontal direction divide an inside of the case **10** into an upper portion and a lower portion. The upper portion constitutes an air intake space where an inside/outside air is introduced. In the lower portion, a sirrocco fan (multi-blade fan) **16** supplying introduced air through the filter to the air conditioning unit **4** is disposed with its rotational axis extending in a perpendicular direction.

The case **10** of the blower unit **3** is provided with the inside air intake **17** introducing air in the vehicle compartment at upper and front side, as shown in FIG. **10** and FIG. **12.** At opposite side of the case, the outside air intake **12** is formed that is connected to an outside air induction duct **12a.** Further, the damper **9** for switching inside/outside air is disposed in such a manner that it closes fully one of the intakes and opens the other fully. The damper **9** includes a closing plate portion **9a** with arc shape that positions against the intakes **12, 17** and a pair of fan-shape side plate portion **9b, 9b** that are curved from both sides of the closing plate portion **9a.** A supporting axis **9c** integrated thereto is also formed at the damper **9** so that it extends in the vehicle width direction from a portion equivalent to the pivot of a fan at the both side plate portion **9b, 9b**.

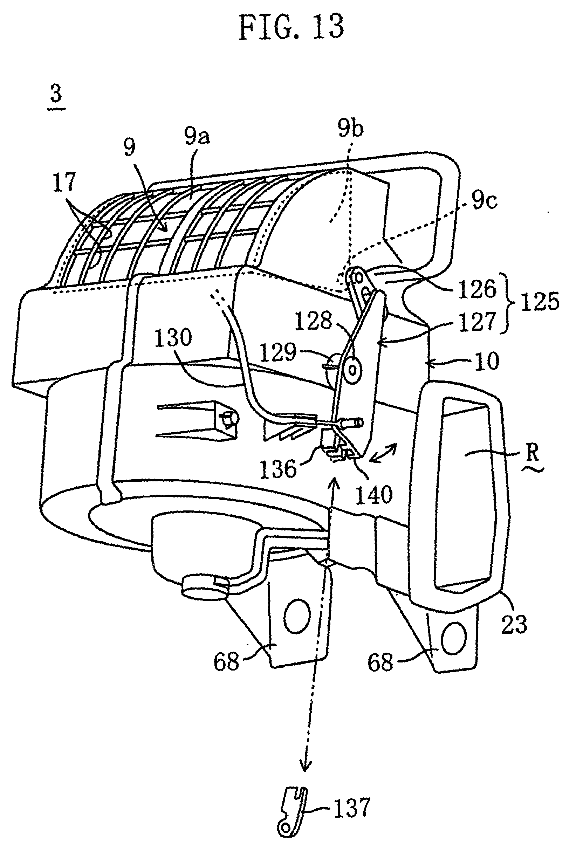

Both ends of the damper axis **9c, 9c** of the damper **9** project outward penetrating side wall of the case **10** of the blower unit **3** and are supported at the side walls rotationally. As sown in FIG. **13**, right axis **9c** is coupled to the linkage member **125** disposed on outer surface of the case **10** (on side surface at a side of the air conditioning unit **4**, which is perpendicular to the vehicle width direction) to be rotated. In a state where the damper **9** opens fully the outside air intake **12**, the inside air intake **17** is closed, resulting in an outside air introduction mode in which only outside air is introduced through the outside air intake duct **12a.** Meanwhile, the damper **9** is driven by the linkage member **125,** then an inside air intake state is formed. In this state, the inside air intake **17** is fully opened, resulting in an inside air introduction mode in which only inside air is introduced.

The linkage member **125** comprises, as shown in FIG. **13,** a first linkage member **126** that is coupled to the axis **9c** rotating together and a second linkage member **127** that is coupled to the first linkage member **126**. The second linkage member **127** is attached to the right-side wall surface of the case **10** of the blower unit **3** rotationally. That is, the second linkage member **127** extends in a vertical direction and it is attached rotationally to a boss **129** at its center portion, that is, a rotationally supporting portion **128** thorough a screw. The boss **129** is formed on the right-side wall of the case **10**. Upper end of the second linkage member **127** is coupled to the first linkage member **126**, and its base end located at lower side in the figure is connected to an end of a wire **130** extending to a lever or the like (not shown) for air conditioning operations. The linkage member **125** is driven through the wire **130** by operations of the lever or the like.

When the sirrocco fan **16** rotates, as shown by broken line of FIG. **12**, the filtered air flowing down through the air filter **15** from the upper air intake space of the case **10** is sucked in an inner periphery side of the sirrocco fan **16**. Then, the sucked air blows out through many rotor blades toward outer periphery side of the sirrocco fan **16.** The air stream flows through a spiral blower passage R, and it flows from the connecting wall **23** integrated to back side (vehicle front side) of the blower unit **3** into the case **20** of the air conditioning unit **4**.

### (Temporary Attachment of Linkage)

Referring now to FIG. **13**, and FIGS. **14 - 16**, temporary attachment structure of the linkage member **127**, which is a feature of the second embodiment, will be described, in which the linkage member **127** is attached temporarily to the case **10** of the blower unit **3** when end of the wire **130** is coupled to the linkage member.

When connecting a wire to a linkage member driving doors or dampers (hereinafter, referred to as damper) to adjust an air stream in the air conditioner **1** disclosed in the second embodiment, it is necessary that temporary attachment is provided by accurately adjusting a position of the damper and positions of operating levers of the air conditioner. For example, as shown in FIG. **13**, firstly the inside/outside air switching damper **9** is controlled to the state of outside air introduction in the blower unit **3**, and then the second linkage member **127** is attached to a position that is equivalent to this state. In this state, the second linkage member **127** is attached to the temporary attachment portion **136** (temporary attachment portion at side of the case) formed at the side surface of the case **10** by the stopper **137.**

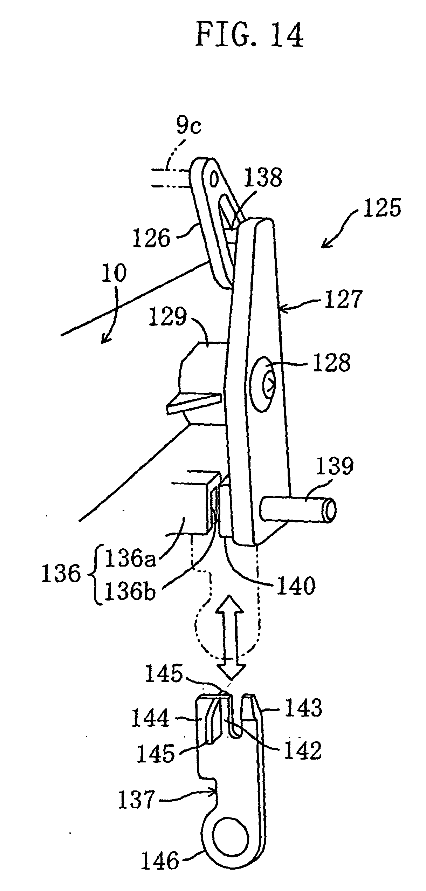

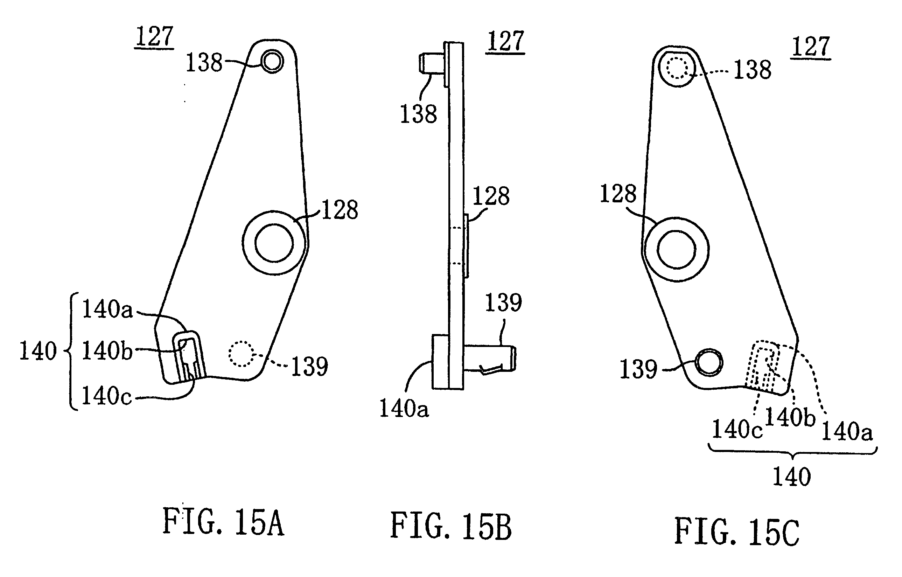

As shown in FIG. **14** and FIGS. **15A - 15C**, the second linkage member **127**, which is, for example, a molding product made of resign like polypropylene, is provided with an attachment pin **138** integrated thereto at its end portion, in which the first linkage member **126** is couple to the pin **138.** Meanwhile, the linkage member **127** is provided with a connecting pin **139** and a temporary attachment portion **140** (temporary attachment portion at side of the linkage) integrated thereto at its base portion, in which end of the wire **130** is coupled to the connecting pin **139** and end of a stopper **137** is inserted in the temporary attachment portion **140.** Now, the second linkage member **127** is located at a position where the temporary attachment portion **140** and temporary attachment portion **136** face each other, and the stopper **137** is attached to the both portions **136, 140**.

More specifically, the case-side temporary attachment portion **136** includes a projection **136a** protruding from the right side surface of the case **10** of the air conditioning case **3** with a rectangular pedestal shape and a groove **136b** having an opening extending straightly in a oblique and vertical direction on its end surface, in which lower end of the groove **136b** opens on the lower surface of the projection **136a.** The groove **136b** extends in substantially parallel to the right-side wall of the case **10,** and also extends avoiding bosses formed at the right-side surface of the case **10** of the blower unit **3** and at the left-side wall of the case **20** of the air conditioning unit **4**, in such a manner that operations of insertion/removal of the stopper **137** to the groove **136b** with ease.

Meanwhile, the linkage-side temporary attachment portion **140** has a similar structure to the case-side temporary attachment portion **136** basically. As shown in FIG. **15A** - FIG. **15C**, the second linkage member **127** is provided with a projection **140a** protruding from the main body of the linkage member **127** with a rectangular pedestal shape and a groove **140b** having an opening extending straightly from the end to the base of the linkage member **127,** in which end of the groove **140b** opens on a surface of the base side of the linkage member **127.**

When the second linkage member **127** attached to the right-side surface of the case **10** is located at the position described above, the projection **140a** of linkage-side temporary attachment portion **140** and the projection **136a** of the case-side temporary attachment portion **136** face each other closely, and the both grooves **136b, 140b** formed at their end surfaces coincide with each other substantially, seeing from the depth of groove. In other words, the groove **140b** of the second linkage member **127** opens in such a manner that it faces the groove **136b** of the case-side temporary attachment portion **136.**

Further, inside of the groove **140b,** a narrow groove **140c** is provided that is disposed at a half portion of groove depth, as shown in the figures. The narrow groove **140c** functions as a connecting portion for a hook **143** of the stopper **137,** which will be described hereinafter.

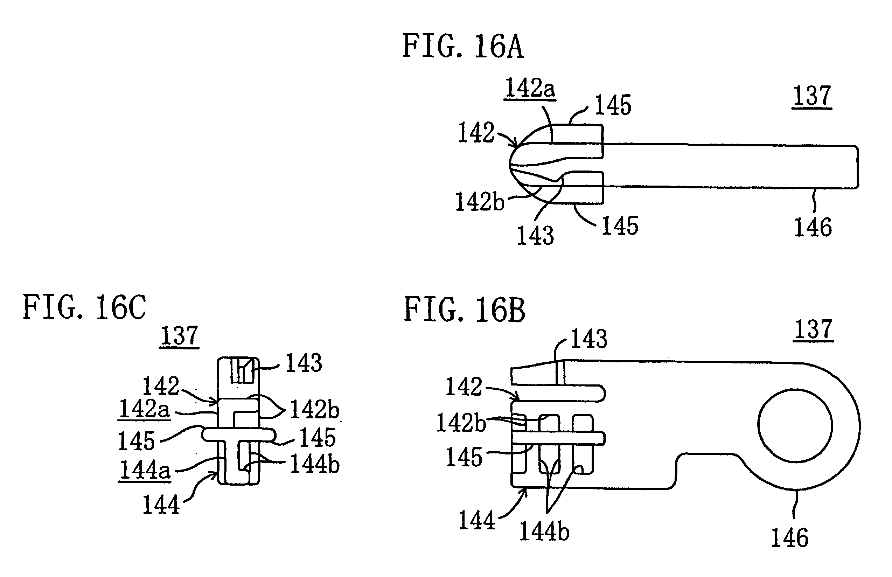

Meanwhile, as shown in **FIG. 16A - FIG. 16C,** the end of the stopper **137** is inserted into the grooves **136b, 140b** respectively so that it can restrict operations of the linkage member **125.** That is, the stopper **137,** which is, for example, a molding product made of resign like polypropylene, is provided with a first inserting portion **142** for the linkage-side groove **140b** at one side (upper side in **FIG. 16B**) of its end portion and the hook **143** detachable for the narrow groove **140c** of the groove **140b.** Additionally, the stopper **137** includes a second inserting portion **144** that is inserted into the case-side groove **136b,** which is disposed at another side (lower side in **FIG. 16B**) in the stopper width direction.

Further, at respective middle portions of the first and second inserting portions **142, 144**, middle extending portions **145, 145** are provided that extend outward from the both sides of the stopper **137**. The middle extending portions **145, 145** are supported between the end surfaces of the projections **136a, 140a** when both inserting portions **142, 144** of the stopper **137** are grooves **136b, 140b** respectively.

Further, more specifically, as shown in FIG. **16C,** one side of a side surface **142a, 144a** (left-side surface in FIG. **16C**) of each inserting portion **142, 144** is a contacting surface with one side of inside surface of each groove **140b, 136b.** Meanwhile, on an opposite side (right side in FIG. **16C**), projection portions **142b, 142b, - - 144b, 144b, - -** are provided so that their end portions contact with the other side of inside surface of grooves **140b, 136b**.

That is, the inserting portion **142, 144** of the stopper **137** has a certain distance between the contacting surface **142a, 144a** and the end of the projection portion **142b, 142b, - - 144b, 144b, - -,** and this distance is equivalent to a width of corresponding groove **140b, 136b,** resulting in tight connection between the inserting portion **142, 144** and the groove **140b, 136b.** Further, thickness of the inserting portion **142, 144** is relatively small and therefore a surface-backing problem in molding can be avoided appropriately resulting in an achievement of accurate manufacturing. Additionally, since a plurality of the projections **142b, 142b,- - 144b, 144b, - -** are disposed so as to cross each other, stable contact between the projections **142b, 142b, - - 144b, 144b, - -** and inside surfaces of the grooves **136b, 140b** can be provided.

The stopper **137** further comprises a holding portion **146** with circular shape at its base to provide easy holding by fingers of one hand of a worker. A pulling material, like a string or a chain, coupled to the holding portion may be provided for easier holding.

Accordingly, in the linkage stopper structure for the vehicle air conditioner disclosed in the second embodiment, the air conditioning unit **4** and the blower unit **3** of the air conditioner **1** are installed to the instrument panel and dash panel of the vehicle, and the linkage member **125** disposed between the both units **3, 4** is coupled to the end of the wire **130.** In this case, firstly, as shown in FIG. **13,** the inside/outside air switching damper **9** of the blower unit **3** is positioned at the outside air intake state, and the second linkage member **127** of the linkage member **125** is located at a predetermined position. At this moment, the temporary attachment portion **140** of the second linkage member **127** approaches the case-side temporary attachment portion **136**, so that the respective openings of the both grooves **140b, 136b** face each other.

Then, as shown in FIG. **14,** the stopper **137** is inserted into the grooves **136b, 140b** from oblique-lower side along the right side surface of the case **10** of the blower unit **3.** Accordingly, the first and second inserting portions **142, 144** of the stopper **137** are inserted into the grooves **140b, 136b** of temporary attachment portions, and the hook **143** of the stopper **137** bends and goes over the groove **140c** in the linkage-side groove **140b,** so that it is locked there. As a result, secure attachment of the stopper **137** can be achieved.

Herein, since the width of the inserting portions **142, 144** is set to be almost equal to that of the grooves **140b, 136b** respectively, the ends of the inserting portions **142, 144** are connected to the grooves **140b, 136b** firmly without a loose connection. Further, the middle extending portions **145, 145** of the stopper **137** is held between the end surfaces of the projection **136a** of the case-side temporary attachment portion **136** and projection **140a** of the linkage-side temporary attachment portion **140,** so that the above loose connection can be avoided further.

That is, the stopper **137** can make the second linkage member **127** to attach to the case **10** quite easily, just by inserting the stopper **137** into the both groves **136b, 140b** from the lower side along the right-side surface of the blower unit **3** within a small space between the air conditioning unit **4** and the blower unit **3**. Further, that can avoid loose connection between them to improve accurate assembling.

Meanwhile, when releasing the connection of the second linkage member **127** by the stopper **137**, just pulling the holding portion **146** of the stopper **137** downward enables the stopper **137** to move out of the grooves **136b, 140b** after unlocking the hook **143.** Accordingly, regardless of small space between the blower unit **3** and the air conditioning unit **4** where the linkage member **125** is disposed, the stopper **137** can be pulled out easily by worker's inserting his/her hand into the space.

In the present embodiment, the linkage member **125** is disposed between the air conditioning unit **4** and the blower unit **3** that are located closely to each other, and the stopper **137** is applied to this linkage member. However, the linkage member may be disposed at the left side of the blower unit **3**, not between the both units **3, 4**, and the stopper described above may be applied to this linkage member. That is, even if other equipments, such as a glove box, a CD changer, are disposed at left side of the blower unit **3**, the stopper described above can be applied to the linkage member disposed in the small space between the equipments and the blower unit **3**.

Further, the above linkage-stopper structure may be applied to a linkage mechanism disposed at not only the blower unit **3** but the air conditioning unit **4**.

Further, the above linkage-stopper structure may be applied to the air conditioner disclosed in the first embodiment. Further, other alternatives may be applied. For example, the projection **60** comprising the temporary attachment structure may be disposed at the blower unit **3**, and the hole **61** may be disposed at the air conditioning unit **4**, which is opposite disposition to the structure disclosed in the first embodiment.

Further, in the temporary attachment structure for the blower unit **3**, the both cases **10, 20** of the blower and air conditioning units **3, 4** may be provided with flanges respectively that are overlapped each other, and a pin may be provided so that the pin is inserted into a hole formed at the overlapped flanges.

Further, the guide member **40** of the air conditioning unit **4** may be formed so that it is integrated to the front wall of the air conditioning unit case **20** or the pipe supporting brackets **30, 31** of the case **20**.

## Claims

1. An air conditioner for a vehicle, comprising:
an air conditioning unit (4) for providing conditioned air by a heat exchanger; a blower unit (3) for supplying an air to be conditioned to said air conditioning unit;
an instrument panel member (7) for reinforcing an instrument panel (2) of the vehicle that extends in the vehicle width direction when mounted, wherein said both units are attached to the instrument panel member so that the units are disposed side by side in the instrument panel when mounted;
a first connecting portion (46) disposed at the upper portion of said air conditioning unit, that is to be attached to said instrument panel member;
a second connecting portion (58) disposed at the upper portion of said blower unit, that is to be attached to said instrument panel member;
an air intake (21) for introducing the air from said blower unit into said air conditioning unit; and
a connecting portion (60, 61) for interconnecting said both units, which is disposed near said air intake (21).

2. The air conditioner for a vehicle of claim 1, wherein said connecting portion (60, 61) is disposed at lower portions of said both units.

3. The air conditioner for a vehicle of claim 2, wherein said first connecting portion (46, 46) is disposed at both of side walls of said air conditioning unit.

4. The air conditioner for a vehicle of claim 2, wherein said second connecting portion (58, 58) is disposed at both of side walls of said blower unit.

5. The air conditioner for a vehicle of claim 3, wherein said second connecting portion (58, 58) is disposed at both of side walls of said blower unit.

6. The air conditioner for a vehicle of claim 5, wherein one of said first connection portion (46) disposed at a side wall that is located at the side of the blower unit and one of said second connecting portion (58) disposed at a side wall that is located at the side of the air conditioning unit are overlapped, and said overlapped connecting portion (46, 58) are attached to said instrument panel member (7).

7. The air conditioner for a vehicle of any of claims 1 - 6, wherein at least one of said first and second connecting portions is attached directly to said instrument panel member.

8. The air conditioner for a vehicle of any of claims 1 - 6, wherein said second connecting portion (58) is disposed at a side wall of said blower unit that is located at opposite side to said air conditioning unit, and the connecting portion (58) is attached directly to said instrument panel member (7).

9. The air conditioner for a vehicle of any of claims 1 - 6, wherein at least one of said second connecting portions is attached directly to said instrument panel member, and an attaching surface of the connecting portion to the instrument panel member has a configuration that matches an external shape of the instrument panel member when seeing from the vehicle width direction.

10. The air conditioner for a vehicle of any of claims 1 - 6, wherein said connecting portion (60, 61) is disposed at the both of said air conditioning unit and blower unit, and the both units are connected by the connecting portion.

11. The air conditioner for a vehicle of any of claims 1 - 6, wherein said connecting portion (60, 61) is disposed at the both of said air conditioning unit and blower unit, one of the connecting portion is a projection (60) and the other of the connecting portion is a hole (61), the projection is provided with a hook (64) at its end, and the projection is inserted into the hole and the hook is locked in there.

12. The air conditioner for a vehicle of any of claims 1 - 6, wherein said connecting portion (60, 61) is disposed at the both of said air conditioning unit and blower unit, the both units are connected by said connecting portion, and wherein said air intake (21) for introducing the air from the blower unit into the air conditioning unit is provided at a frontside of the vehicle when mounted.

13. The air conditioner for a vehicle of any of claims 1 - 6, wherein said connecting portion (60, 61) is disposed at the both of said air conditioning unit and blower unit, the both units are connected by the connecting portion, an air intake (21) for introducing the air from the blower unit into the air conditioning unit is provided at a front side of the vehicle, the air conditioning unit includes a heat exchanger (25) for cooling the introduced air through the air intake and a heat exchanger (26) for warming the air flowing down through the heat exchanger for cooling air, and said connecting portion (60,61) is disposed near the air intake (21) and at lower position of the heat exchanger for cooling air (25).

14. The air conditioner for a vehicle of any of claims 1 - 6, wherein said connecting portion (60, 61) is disposed at the both of said air conditioning unit and blower unit, the both units are connected by the connecting portion, an air intake (21) for introducing the air from the blower unit into the air conditioning unit is provided at a front side of the vehicle, the air conditioning unit includes a heat exchanger (25) for cooling the introduced air through the air intake and a heat exchanger (26) for warming the air flowing down through the heat exchanger for cooling air, the heat exchanger for cooling air is disposed in the air conditioning unit so that it extends in a substantially vertical direction, the heat exchanger for warming air is disposed at a vehicle rear side of the heat exchanger for cooling air so that it is inclined in such a manner that its upper end is away from the heat exchanger for cooling air, and said connecting portion (60,61) is disposed near the air intake (21) and at lower position of the heat exchanger for cooling air (25).

15. The air conditioner for a vehicle of any of claim 1 - 6, wherein a third connecting portion (68, 45) to be attached to a vehicle body is provided at any of said both units (3, 4).

16. The air conditioner for a vehicle of any of claims 1 - 6, wherein a third connecting portion (68) to be attached to a vehicle body is provided at said blower unit (3).

17. The air conditioner for a vehicle of any of claims 1 - 6, wherein a third connecting portion (45) to be attached to a vehicle body is provided at said air conditioning unit (4).

18. The air conditioner for a vehicle of any of claims 1 - 6, wherein a third connecting portion (68, 45) to be attached to a vehicle body is provided at said both units (3, 4) respectively, the third connecting portion of the both units are o-overlapped, and the overlapped connecting portion are attached to a vehicle body.

19. The air conditioner for a vehicle of any of claims 1 - 6, wherein a stay (52, 54) extending downward is fixed to the instrument panel member, and a lower connecting portion (53, 55) fixed to a lower end of the stay is disposed at a lower portion of the air conditioning unit.

20. The air conditioner for a vehicle of any of claims 1 - 6, wherein two stays (52, 54) extending downward at both sides of the air conditioning unit are fixed to the instrument panel member respectively, and lower connecting portion (53, 55) fixed to lower ends of the stays are disposed at lower portion of the air conditioning unit.

21. The air conditioner for a vehicle of any of claims 1 - 6, wherein two stays (52, 54) extending downward and rearward of the vehicle at both sides of the air conditioning unit are fixed to the instrument panel member respectively, and lower connecting portion (53, 55) fixed to lower ends of the stays are disposed at lower portion of the air conditioning unit.

22. The air conditioner for a vehicle of any of claims 1 - 6, wherein two stays (52, 54) extending downward and rearward of the vehicle at both sides of the air conditioning unit are fixed to the instrument panel member respectively, lower connecting portion (53, 55) fixed to lower ends of the stays are disposed at lower portion of the air conditioning unit, said connecting portion (60) is disposed at the vehicle front side of the lower connecting portion (53, 55), and said first connecting portion (46), the lower connecting portion (53, 55) and the connecting portion (60) are disposed in such a manner that these are located at vertex of a triangle seeing from the vehicle width direction.

23. The air conditioner for a vehicle of any of claims 1 - 6, wherein a damper (27) is disposed in either case of said blower units or said air conditioning unit to control a stream of air to be conditioned or conditioned air, a linkage member (125) for controlling the damper is disposed at outer surface of said either case, and a temporary attachment portion (136) is disposed so that the linkage member is temporarily attached to the outer surface at its predetermined position by installing a stopper (137).

24. The air conditioner for a vehicle of any of claims 1 - 6, wherein a damper (27) is disposed in either case of said blower units or said air conditioning unit to control a stream of air to be conditioned or conditioned air, a linkage member (125) for controlling the damper is disposed at outer surface of said either case, a temporary attachment portion (136) is disposed so that the linkage member is temporarily attached to the outer surface at its predetermined position by installing a stopper (137), the temporary attachment portion (136) includes a projection (136a) protruding from the outer surface and a groove (136b) that opens on an end surface of the projection and extends straightly along the outer surface and, an end portion of which opens on an outer peripheral surface of the projection, the linkage member is provided with a groove (140b) that faces said groove (136b) when the linkage member is located at said predetermined position, and the stopper includes two inserting portions (142, 144) inserting into the respective grooves (136b, 140b) of the temporary attachment portion and the linkage member and a hook (143) capable of lock/unlock with a portion disposed in either the temporary attachment portion or the linkage member.

25. The air conditioner for a vehicle of any of claims 1 - 6, wherein a damper (27) is disposed in either case of said blower units or said air conditioning unit to control a stream of air to be conditioned or conditioned air, a linkage member (125) for controlling the damper is disposed at outer surface of said either case, a temporary attachment portion (136) is disposed so that the linkage member is temporarily attached to the outer surface at its predetermined position by installing a stopper (137), and said outer surface of the case where the linkage member is disposed extends in substantially perpendicular direction to the vehicle width direction.

26. The air conditioner for a vehicle of any of claims 1 - 6, wherein a damper (27) is disposed in either case of said blower units or said air conditioning unit to control a stream of air to be conditioned or conditioned air, a linkage member (125) for controlling the damper is disposed at outer surface of said either case and at its side surface facing the other case, a temporary attachment portion (136) is disposed so that the linkage member is temporarily attached to the outer surface at its predetermined position by installing a stopper (137), and the stopper is formed so that it can be removed from its inserted position into the temporary attachment portion in the vehicle longitudinal direction.

27. The air conditioner for a vehicle of any of claims 1 - 6, wherein said connecting portion (60, 61) is disposed at the both of said air conditioning unit and blower unit, the both units are connected by the connecting portion, a damper (27) is disposed in a case of said blower units to control a stream of air to be conditioned, a linkage member (125) for controlling the damper is disposed at outer surface of the case of the blower unit, a temporary attachment portion (136) is disposed so that the linkage member is temporarily attached to the outer surface at its predetermined position by installing a stopper (137), and said outer surface of the case of the blower unit where the linkage member is disposed is a side surface located at the side of the air conditioning and extends in substantially perpendicular direction to the vehicle width direction.

28. The air conditioner for a vehicle of any of claims 1 - 6, wherein said connecting portion (60, 61) is disposed at the both of said air conditioning unit and blower unit, the both units are connected by the connecting portion, a damper (27) is disposed in either case of said blower units or said air conditioning unit to control a stream of air to be conditioned or conditioned air, a linkage member (125) for controlling the damper is disposed at outer surface of said either case, a temporary attachment portion (136) is disposed so that the linkage member is temporarily attached to the outer surface at its predetermined position by installing a stopper (137), the temporary attachment portion (136) includes a projection (136a) protruding from the outer surface and a groove (136b) that opens on an end surface of the projection and extends straightly along the outer surface and, an end portion of which opens on an outer peripheral surface of the projection, the linkage member is provided with a groove (140b) that faces said groove (136b) when the linkage member is located at said predetermined position, and the stopper includes two inserting portions (142, 144) inserting into the respective grooves (136b, 140b) of the temporary attachment portion and the linkage member, a hook (143) capable of lock/unlock with a portion disposed in either the temporary attachment portion or the linkage member, and middle extending portions (145, 145) extending outward from the both sides of the stopper between the two inserting portions (142, 144) and supported between an end surface of the projection (140a) and an opposite end surface facing closely said end surface of the projection (140a).

29. The air conditioner for a vehicle of any of claims 1 - 6, wherein said connecting portion (60, 61) is disposed at the both of said air conditioning unit and blower unit, the both units are connected by the connecting portion, a damper (27) is disposed in either case of said blower units or said air conditioning unit to control a stream of air to be conditioned or conditioned air, a linkage member (125) for controlling the damper is disposed at outer surface of said either case, a temporary attachment portion (136) is disposed so that the linkage member is temporarily attached to the outer surface at its predetermined position by installing a stopper (137), the temporary attachment portion (136) includes a projection (136a) protruding from the outer surface and a groove (136b) that opens on an end surface of the projection and extends straightly along the outer surface and, an end portion of which opens on an outer peripheral surface of the projection, the linkage member is provided with a groove (140b) that faces said groove (136b) when the linkage member is located at said predetermined position, the stopper is a molding product made of a resin and includes two inserting portions (142, 144) inserting into the respective grooves (136b, 140b) of the temporary attachment portion and the linkage member, a hook (143) capable of lock/unlock with a portion disposed in either the temporary attachment portion or the linkage member, one side of a side surface (142a, 144a) of the inserting portion (142, 144) of the stopper is a contacting surface with one side of inside surface of the groove (140b, 136b) of the linkage member or the temporary attachment portion, and on an opposite side to said contacting surface of the inserting portion, plural projection portions (142b, 142, 144b, 144b) contacting with the other side of inside surface of the grooves (140b, 136b) and crossing each other are provided.

30. The air conditioner for a vehicle of any of claims 1 - 6, further comprising:
a pipe member (29, 31) extending forward of the vehicle through a hole (37) formed at a dash panel of the vehicle; and a guide member (40) extending forward of the vehicle for guiding said pipe member to the hole.

31. A method for attaching an air conditioner to an instrument panel (2) of a vehicle including an air conditioning unit (4) for providing conditioned air by a heat exchanger and a blower unit (3) for supplying an air to be conditioned to said air conditioning unit, the method comprising:
a step of sub-assembly in which respective upper portions of said air conditioning unit and said blower unit are attached to an instrument panel member (7)
that extends in the vehicle width direction and is disposed in said instrument panel, out side of the vehicle; and a step of vehicle body assembly in which said sub-assembled instrument panel is carried in a vehicle body and attached to the vehicle body after said step of sub-assembly, wherein said step of sub-assembly comprises:
a step of unit attachment in which said air conditioning unit and said blower unit are respectively attached to said instrument panel member;
a step of coupling in which an air vent of said blower unit and an air intake (21) of said air conditioning unit are coupled during or after said step of unit attachment; and
a step of connection in which connecting portions (45, 68) disposed respectively at said air conditioning unit and said blower unit are interconnected during or after said step of unit attachment.

32. A method for attaching an air conditioner to an instrument panel of a vehicle of claim 31, wherein said step of unit attachment is a step in which at first said air conditioning unit is attached to said instrument panel member, and then said blower unit is attached to said instrument panel member, and said step of connection is a step in which when said blower unit is attached to said instrument panel member in said step of unit attachment, said connecting portion (68) of the blower unit is connected to said connecting portion (45) of the air conditioning unit.

33. A method for attaching an air conditioner to an instrument panel of a vehicle of claim 32, wherein either one of said connecting portions of the air conditioning unit and the blower unit is a projection (60) and the other one of said connecting portions is a hole (61), the projection is provided with a hook (64) at its end that is inserted into the hole and locked in there, and said connection of said connecting portions of the air conditioning unit and the blower unit is achieved by inserting said projection (60) into said hole (61) with lock of said hook (64) in said step of connection.

34. A method for attaching an air conditioner to an instrument panel of a vehicle of any claims 31 - 33, wherein said air conditioner for a vehicle comprises a pipe member (29, 31) extending forward of the vehicle through a hole (33) formed at a dash panel of the vehicle and a guide member (40) extending forward of the vehicle thorough a guide hole (37) for guiding said pipe member to the hole, and when said instrument panel is attached to the vehicle body in said step of vehicle body assembly, said guide member (40) is inserted into said guide hole (37) so that said pipe member passes through said hole (37).

## Patentansprüche

1. Klimaanlage für ein Fahrzeug, umfassend:
eine Klimaeinheit (4), um klimatisierte Luft durch einen Wärmeaustauscher bereitzustellen; eine Gebläseeinheit (3), um dieser Klimaeinheit eine zu klimatisierende Luft zuzuführen;
ein Armaturenbrettelement (7) zur Verstärkung eines Armaturenbretts (2) des Fahrzeugs, das in Richtung der Fahrzeugbreite verläuft, wenn es eingebaut ist, wobei die beiden Einheiten im Armaturenbrett Seite an Seite angeordnet sind, wenn sie eingebaut sind;
einen am oberen Abschnitt der Klimaeinheit angeordneten ersten Verbindungsabschnitt (46), der an das Armaturenbrettelement zu befestigen ist;
einen am oberen Abschnitt der Gebläseeinheit angeordneten zweiten Verbindungsabschnitt (58), der an das Armaturenbrettelement zu befestigen ist;
einen Lufteinlaß (21), um die Luft aus der Gebläseeinheit in die Klimaeinheit einzuleiten; und
einen Verbindungsabschnitt (60, 61), der neben diesem Lufteinlaß (21) angeordnet ist, um beide Einheiten miteinander zu verbinden.

2. Klimaanlage für ein Fahrzeug nach Anspruch 1, wobei dieser Verbindungsabschnitt (60, 61) an den unteren Abschnitten beider Einheiten angeordnet ist.

3. Klimaanlage für ein Fahrzeug nach Anspruch 2, wobei der erste Verbindungsabschnitt (46, 46) an beiden Seitenwänden der Klimaeinheit angeordnet ist.

4. Klimaanlage für ein Fahrzeug nach Anspruch 2, wobei der zweite Verbindungsabschnitt (58, 58) an beiden Seitenwänden der Gebläseeinheit angeordnet ist.

5. Klimaanlage für ein Fahrzeug nach Anspruch 3, wobei der zweite Verbindungsabschnitt (58, 58) an beiden Seitenwänden der Gebläseeinheit angeordnet ist.

6. Klimaanlage für ein Fahrzeug nach Anspruch 5, wobei ein erster Verbindungsabschnitt (64), der an einer Seitenwand angeordnet ist, die auf der Seite der Gebläseeinheit liegt, und ein zweiter Verbindungsabschnitt (58), der an einer Seitenwand angeordnet ist, die auf der Seite der Klimaeinheit liegt, sich überlappen, und diese überlappenden Verbindungsabschnitte (46, 58) am Armaturenbrettelement (7) befestigt sind.

7. Klimaanlage für ein Fahrzeug nach einem der Ansprüche 1 - 6, wobei mindestens einer der ersten und zweiten Verbindungsabschnitte direkt am Armaturenbrettelement befestigt ist.

8. Klimaanlage für ein Fahrzeug nach einem der Ansprüche 1 - 6, wobei der zweite Verbindungsabschnitt (58) an einer Seitenwand der Gebläseeinheit angeordnet ist, die auf der Gegenseite der Klimaeinheit liegt, und der Verbindungsabschnitt (58) direkt am Armaturenbrettelement (7) befestigt ist.

9. Klimaanlage für ein Fahrzeug nach einem der Ansprüche 1 - 6, wobei mindestens einer der zweiten Verbindungsabschnitte direkt am Armaturenbrettelement befestigt ist und eine Befestigungsfläche des Verbindungsabschnitts mit dem Armaturenbrettelement eine Konfiguration aufweist, die, von der Richtung der Fahrzeugbreite aus gesehen, an die Außenform des Armaturenbrettelements angepaßt ist.

10. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, und beide Einheiten durch den Verbindungsabschnitt verbunden sind.

11. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, ein Verbindungsabschnitt ein Vorsprung (60) und der andere Verbindungsabschnitt ein Loch (61) ist, der Vorsprung (60) an seinem Ende mit einem Haken (64) versehen ist, und der Vorsprung in das Loch gesteckt wird und der Haken darin einrastet.

12. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, und die beiden Einheiten durch diesen Verbindungsabschnitt verbunden sind, und wobei der Lufteinlaß (21) zum Einleiten der Luft aus der Gebläseeinheit auf einer Frontseite des Fahrzeugs vorgesehen ist, wenn er eingebaut ist.

13. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, die beiden Einheiten durch den Verbindungsabschnitt verbunden sind, ein Lufteinlaß (21) zum Einleiten der Luft aus der Gebläseeinheit auf einer Frontseite des Fahrzeugs angeordnet ist, die Klimaeinheit einen Wärmeaustauscher (25) umfaßt, um die durch den Lufteinlaß eingeleitete Luft zu kühlen, und einen Wärmeaustauscher (26), um die durch den Wärmeaustauscher zum Kühlen der Luft hinabströmende Luft zu wärmen, und dieser Verbindungsabschnitt (60, 61) neben dem Lufteinlaß (21) und an der unteren Position des Wärmeaustauschers zum Kühlen der Luft (25) angeordnet ist.

14. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, die beiden Einheiten durch den Verbindungsabschnitt verbunden sind, ein Lufteinlaß (21) zum Einleiten der Luft aus der Gebläseeinheit auf einer Frontseite des Fahrzeugs angeordnet ist, die Klimaeinheit einen Wärmeaustauscher (25) umfaßt, um die durch den Lufteinlaß eingeleitete Luft zu kühlen, und einen Wärmeaustauscher (26), um die durch den Wärmeaustauscher zum Kühlen der Luft herabströmende Luft zu wärmen, der Wärmeaustauscher zum Kühlen der Luft so in der Klimaeinheit angeordnet ist, daß er in einer im wesentlichen senkrechten Richtung verläuft, der Wärmeaustauscher zum Wärmen der Luft an einer Fahrzeugheckseite des Wärmeaustauschers zum Kühlen der Luft so angeordnet ist, daß er auf solche Weise geneigt ist, daß sein oberes Ende vom Wärmeaustauscher zum Kühlen der Luft weg liegt, und der Verbindungsabschnitt (60, 61) neben dem Lufteinlaß (21) und an der unteren Position des Wärmeaustauschers zum Kühlen der Luft (25) angeordnet ist.

15. Klimaanlage für ein Fahrzeug nach einem der Ansprüche 1 - 6, wobei an jeder der beiden Einheiten (3, 4) ein dritter Verbindungsabschnitt (68, 45) vorgesehen ist, der an eine Fahrzeugkarosserie zu befestigen ist.

16. Klimaanlage für ein Fahrzeug nach einem der Ansprüche 1 - 6, wobei an der Gebläseeinheit (3) ein dritter Verbindungsabschnitt (68) vorgesehen ist, der an eine Fahrzeugkarosserie zu befestigen ist.

17. Klimaanlage für ein Fahrzeug nach einem der Ansprüche 1 - 6, wobei an der Klimaeinheit (4) ein dritter Verbindungsabschnitt (45) vorgesehen ist, der an eine Fahrzeugkarosserie zu befestigen ist.

18. Klimaanlage für ein Fahrzeug nach einem der Ansprüche 1 - 6, wobei an beiden Einheiten (3, 4) jeweils ein dritter Verbindungsabschnitt (68, 45) vorgesehen ist, der an eine Fahrzeugkarosserie zu befestigen ist, wobei die dritten Verbindungsabschnitte beider Einheiten sich überlappen, und die überlappenden Verbindungsabschnitte an einer Fahrzeugkarosserie befestigt sind.

19. Klimaanlage für ein Fahrzeug nach einem der Ansprüche 1 - 6, wobei eine nach unten verlaufende Stütze (52, 54) am Armaturenbrettelement befestigt ist, und ein unterer Verbindungsabschnitt (53, 55), der an einem unteren Ende der Stütze befestigt ist, an einem unteren Abschnitt der Klimaeinheit angeordnet ist.

20. Klimaanlage für ein Fahrzeug nach einem der Ansprüche 1 - 6, wobei zwei Stützen (52, 54), die auf beiden Seiten der Klimaeinheit nach unten verlaufen, jeweils am Armaturenbrettelement befestigt sind, und untere Verbindungsabschnitte (53, 55), die an unteren Enden der Stützen befestigt sind, am unteren Abschnitt der Klimaeinheit angeordnet sind.

21. Klimaanlage für ein Fahrzeug nach einem der Ansprüche 1 - 6, wobei zwei Stützen (52, 54), die auf beiden Seiten der Klimaeinheit nach unten und in Richtung des Fahrzeughecks verlaufen, jeweils am Armaturenbrettelement befestigt sind, und untere Verbindungsabschnitte (53, 55), die an unteren Enden der Stützen befestigt sind, am unteren Abschnitt der Klimaeinheit angeordnet sind.

22. Klimaanlage für ein Fahrzeug nach einem der Ansprüche 1 - 6, wobei zwei Stützen (52, 54), die auf beiden Seiten der Klimaeinheit nach unten und in Richtung des Fahrzeughecks verlaufen, jeweils am Armaturenbrettelement befestigt sind, untere Verbindungsabschnitte (53, 55), die an unteren Enden der Stützen befestigt sind, am unteren Abschnitt der Klimaeinheit angeordnet sind, der Verbindungsabschnitt (60) auf der Fahrzeugfrontseite des unteren Verbindungsabschnitts (53, 55) angeordnet ist, und der erste Verbindungsabschnitt (46), der untere Verbindungsabschnitt (53, 55) und der Verbindungsabschnitt (60) auf solche Weise angeordnet sind, daß sie, von der Richtung der Fahrzeugbreite aus gesehen, am Scheitel eines Dreiecks liegen.

23. Klimaanlage für ein Fahrzeug nach einem der Ansprüche 1 - 6, wobei eine Luftklappe (27) entweder im Gehäuse der Gebläseeinheit oder der Klimaeinheit angeordnet ist, um einen zu klimatisierenden oder klimatisierten Luftstrom zu regeln, ein Verbindungselement (125) zum Steuern der Luftklappe an der Außenfläche dieses Gehäuses angeordnet ist, und ein vorläufiger Befestigungsabschnitt (136) so angeordnet ist, daß das Verbindungselement an der der Außenfläche vorläufig an seiner vorgegebenen Position befestigt wird, indem ein Anschlag (137) angebracht wird.

24. Klimaanlage für ein Fahrzeug nach einem der Ansprüche 1 - 6, wobei eine Luftklappe (27) entweder im Gehäuse der Gebläseeinheit oder der Klimaeinheit angeordnet ist, um einen zu klimatisierenden oder klimatisierten Luftstrom zu regeln, ein Verbindungselement (125) zum Steuern der Luftklappe an der Außenfläche dieses Gehäuses angeordnet ist, ein vorläufiger Befestigungsabschnitt (136) so angeordnet ist, daß das Verbindungselement an der der Außenfläche vorläufig an seiner vorgegebenen Position angebracht wird, indem ein Anschlag (137) angebracht wird, der vorläufige Befestigungsabschnitt (136) einen Vorsprung (136a) umfaßt, der von der Außenfläche vorspringt, und eine Nut (136b), die an einer Endfläche des Vorsprungs offen ist und gerade entlang der Außenfläche verläuft, und wovon ein Endabschnitt an einer äußeren Umfangsfläche des Vorsprungs offen ist, das Verbindungselement mit einer Nut (140b) versehen ist, die dieser Nut (136b) gegenüberliegt, wenn das Verbindungselement an seiner vorgegebenen Position angeordnet ist, und der Anschlag zwei eingreifende Abschnitte (142, 144) umfaßt, die in die jeweiligen Nuten (136b, 140b) des vorläufigen Befestigungsabschnitts und des Verbindungselements eingreifen, und einen Haken (143), der in der Lage ist, mit einem Abschnitt einzurasten/auszurasten, der entweder im vorläufigen Befestigungsabschnitt oder im Verbindungselement angeordnet ist.

25. Klimaanlage für ein Fahrzeug nach einem der Ansprüche 1 - 6, wobei eine Luftklappe (27) entweder im Gehäuse der Gebläseeinheit oder der Klimaeinheit angeordnet ist, um einen zu klimatisierenden oder klimatisierten Luftstrom zu regeln, ein Verbindungselement (125) zum Steuern der Luftklappe an der Außenfläche dieses Gehäuses angeordnet ist, ein vorläufiger Befestigungsabschnitt (136) so angeordnet ist, daß das Verbindungselement an der der Außenfläche vorläufig an seiner vorgegebenen Position befestigt wird, indem ein Anschlag (137) angebracht wird, und die Außenfläche des Gehäuses, wo das Verbindungselement angeordnet ist, im wesentlichen rechtwinklig zur Richtung der Fahrzeugbreite verläuft.

26. Klimaanlage für ein Fahrzeug nach einem der Ansprüche 1 - 6, wobei eine Luftklappe (27) entweder im Gehäuse der Gebläseeinheit oder der Klimaeinheit angeordnet ist, um einen zu klimatisierenden oder klimatisierten Luftstrom zu regeln, ein Verbindungselement (125) zum Steuern der Luftklappe an der Außenfläche dieses Gehäuses und an seiner Seitenfläche angeordnet ist, die dem anderen Gehäuse gegenüberliegt, ein vorläufiger Befestigungsabschnitt (136) so angeordnet ist, daß das Verbindungselement an der der Außenfläche an seiner vorgegebenen Position vorläufig befestigt wird, indem ein Anschlag (137) angebracht wird, und der Anschlag so geformt ist, daß er aus in den vorläufigen Befestigungsabschnitt seiner eingesteckten Position in Richtung der Fahrzeuglänge abgenommen werden kann.

27. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, die beiden Einheiten durch den Verbindungsabschnitt verbunden sind, eine Luftklappe (27) in einem Gehäuse der Gebläseeinheit angeordnet ist, um einen zu klimatisierenden Luftstrom zu regeln, ein Verbindungselement (125) zum Steuern der Luftklappe an der Außenfläche des Gehäuses der Gebläseeinheit angeordnet ist, ein vorläufiger Befestigungsabschnitt (136) so angeordnet ist, daß das Verbindungselement an der der Außenfläche vorläufig an seiner vorgegebenen Position befestigt wird, indem ein Anschlag (137) angebracht wird, und die Außenfläche des Gehäuses der Gebläseeinheit, wo das Verbindungselement angeordnet ist, eine Seitenfläche ist, die auf der Seite der Klimaeinheit liegt und im wesentlichen rechtwinklig zur Richtung der Fahrzeugbreite verläuft.

28. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, die beiden Einheiten durch den Verbindungsabschnitt verbunden sind, eine Luftklappe (27) entweder im Gehäuse der Gebläseeinheit oder der Klimaeinheit angeordnet ist, um einen zu klimatisierenden oder klimatisierten Luftstrom zu regeln, ein Verbindungselement (125) zum Steuern der Luftklappe an der Außenfläche dieses Gehäuses angeordnet ist, ein vorläufiger Befestigungsabschnitt (136) so angeordnet ist, daß das Verbindungselement an der der Außenfläche vorläufig an seiner vorgegebenen Position befestigt wird, indem ein Anschlag (137) angebracht wird, der vorläufige Befestigungsabschnitt (136) einen Vorsprung (136a) umfaßt, der von der Außenfläche vorspringt, und eine Nut (136b), die an einer Endfläche des Vorsprungs offen ist und gerade entlang der Außenfläche verläuft, und wovon ein Endabschnitt an einer äußeren Umfangsfläche des Vorsprungs offen ist, das Verbindungselement mit einer Nut (140b) versehen ist, die der Nut (136b) gegenüberliegt, wenn das Verbindungselement an der vorgegebenen Position angeordnet ist, und der Anschlag zwei eingreifende Abschnitte (142, 144) umfaßt, die in die jeweiligen Nuten (136b, 140b) des vorläufigen Befestigungsabschnitts und des Verbindungselements eingreifen, einen Haken (143), der in der Lage ist, mit einem Abschnitt einzurasten/auszurasten, der entweder im vorläufigen Befestigungsabschnitt oder im Verbindungselement angeordnet ist, und in der Mitte verlaufende Abschnitte (145, 145), die zwischen den zwei eingreifenden Abschnitten (142, 144) von beiden Seiten des Anschlags aus nach außen verlaufen und zwischen einer Endfläche des Vorsprungs (140a) und einer gegenüberliegenden Endfläche des Vorsprungs 140a getragen wird, die dieser Endfläche dicht gegenüberliegt.

29. Klimaanlage für ein Fahrzeug nach einem der Ansprüche 1 - 6, wobei der Verbindungsabschnitt (60, 61) sowohl an der Klimaeinheit als auch an der Gebläseeinheit angeordnet ist, die beiden Einheiten durch den Verbindungsabschnitt verbunden sind, eine Luftklappe (27) entweder im Gehäuse der Gebläseeinheit oder der Klimaeinheit angeordnet ist, um einen zu klimatisierenden oder klimatisierten Luftstrom zu regeln, ein Verbindungselement (125) zum Steuern der Luftklappe an der Außenfläche dieses Gehäuses angeordnet ist, ein vorläufiger Befestigungsabschnitt (136) so angeordnet ist, daß das Verbindungselement an der der Außenfläche vorläufig an seiner vorgegebenen Position befestigt wird, indem ein Anschlag (137) angebracht wird, der vorläufige Befestigungsabschnitt (136) einen Vorsprung (136a) umfaßt, der von der Außenfläche vorspringt, und eine Nut (136b), die an einer Endfläche des Vorsprungs offen ist und gerade entlang der Außenfläche verläuft, und wovon ein Endabschnitt an einer äußeren Umfangsfläche des Vorsprungs offen ist, das Verbindungselement mit einer Nut (140b) versehen ist, die dieser Nut (136b) gegenüberliegt, wenn das Verbindungselement an seiner vorgegebenen Position angeordnet ist, der Anschlag ein Gußerzeugnis ist, das aus Harz besteht und zwei eingreifende Abschnitte (142, 144) umfaßt, die in die jeweiligen Nuten (136b, 140b) des vorläufigen Befestigungsabschnitts und des Verbindungselements eingreifen, einen Haken (143), der in der Lage ist, mit einem Abschnitt einzurasten/ auszurasten, der im vorläufigen Befestigungsabschnitt oder im Verbindungselement angeordnet ist, eine Seite einer Seitenfläche (142a, 144a) des eingreifenden Abschnitts (142, 144) des Anschlags eine Kontaktfläche mit einer Seite der Innenfläche der Nut (140b, 136b) des Verbindungselements oder des vorläufigen Befestigungsabschnitts ist, und auf einer Seite, die dieser Kontaktfläche des eingreifenden Abschnitts gegenüberliegt, mehrere vorspringende Abschnitte (142b, 142, 144b, 144b) vorgesehen sind, die mit der anderen Seite der Innenfläche der Nuten (140b, 136b) in Kontakt sind und sich einander überkreuzen.

30. Klimaanlage für ein Fahrzeug nach einem der Ansprüche 1 - 6, außerdem umfassend:
ein Rohrelement (29, 31), das durch ein Loch (37), das im Armaturenbrett des Fahrzeugs geformt ist, im Fahrzeug nach vorne verläuft; und ein Führungselement (40), das im Fahrzeug nach vorne verläuft, um dieses Rohrelement zum Loch zu führen.

31. Verfahren zur Befestigung einer Klimaanlage an ein Armaturenbrett eines Fahrzeugs, umfassend eine Klimaeinheit (4), um klimatisierte Luft durch einen Wärmeaustauscher bereitzustellen, und eine Gebläseeinheit (3), um dieser Klimaeinheit eine zu klimatisierende Luft zuzuführen, wobei dieses Verfahren umfaßt:
einen Schritt der Teilmontage, bei dem jeweilige obere Abschnitte der Klimaeinheit und der Gebläseeinheit außerhalb des Fahrzeugs an ein Armaturenbrettelement (7) befestigt werden, das in Richtung der Fahrzeugbreite verläuft und im Armaturenbrett angeordnet wird; und einen Schritt der Karosseriemontage, bei dem dieses teilmontierte Armaturenbrett in eine Fahrzeugkarosserie gebracht wird und nach dem Schritt der Teilmontage an die Fahrzeugkarosserie befestigt wird, wobei dieser Schritt der Teilmontage umfaßt:
einen Einheiten-Befestigungsschritt, bei dem die Klimaeinheit und die Gebläseeinheit jeweils am Armaturenbrettelement befestigt werden;
einen Kopplungsschritt, bei dem, während oder nach dem Einheiten-Befestigungsschritt, ein Luftauslaß der Gebläseeinheit mit einem Lufteinlaß (21) der Klimaeinheit gekoppelt wird;
einen Verbindungsschritt, bei dem, während oder nach dem Einheiten-Befestigungsschritt, Verbindungsabschnitte (45, 68), die jeweils an der Klimaeinheit und der Gebläseeinheit angeordnet sind, miteinander verbunden werden.

32. Verfahren zur Befestigung einer Klimaanlage an ein Armaturenbrett eines Fahrzeugs nach Anspruch 31, wobei der Einheiten-Befestigungsschritt ein Schritt ist, bei dem zuerst die Klimaeinheit an das Armaturenbrettelement befestigt wird, und dann die Gebläseeinheit an das Armaturenbrettelement befestigt wird, und der Verbindungsschritt ein Schritt ist, bei dem der Verbindungsabschnitt (68) der Gebläseeinheit mit dem Verbindungsabschnitt (45) der Klimaeinheit verbunden wird, wenn die Gebläseeinheit im Einheiten-Befestigungsschritt an das Armaturenbrettelement befestigt wird.

33. Verfahren zur Befestigung einer Klimaanlage an ein Armaturenbrett eines Fahrzeugs nach Anspruch 32, wobei einer der Verbindungsabschnitte der Klimaeinheit und der Gebläseeinheit ein Vorsprung (60) und der andere der Verbindungsabschnitte ein Loch (61) ist, der Vorsprung an seinem Ende mit einem Haken (64) versehen ist, der in das Loch gesteckt wird und dort einrastet, und diese Verbindung der Verbindungsabschnitte der Klimaeinheit und der Gebläseeinheit erreicht wird, indem im Verbindungsschritt der Vorsprung (60) in das Loch (61) eingeführt wird und der Haken (64) dabei einrastet.

34. Verfahren zur Befestigung einer Klimaanlage an ein Armaturenbrett eines Fahrzeugs nach einem der Ansprüche 31 - 33, wobei diese Klimaanlage für ein Fahrzeug ein Rohrelement (29, 31) umfaßt, das durch ein Loch (33), das im Armaturenbrett des Fahrzeugs geformt ist, im Fahrzeug nach vorne verläuft, und ein Führungselement (40), das durch ein Führungsloch (37) im Fahrzeug nach vorne verläuft, um dieses Rohrelement zum Loch zu führen, und dieses Führungselement (40) in das Führungsloch (37) eingeführt wird, so daß dieses Rohrelement durch dieses Loch (37) hindurch geführt wird, wenn das Armaturenbrett im Schritt der Karosseriemontage an die Karosserie befestigt wird.

## Revendications

1. Système de climatisation de véhicule, comprenant en combinaison:
une unité de conditionnement d'air (4) pour fournir de l'air conditionné par un échangeur de chaleur ; une unité formant soufflante ou soufflerie (3) pour fournir un air à conditionner à ladite unité de conditionnement d'air ;
un élément de tableau de bord (7) pour renforcer un tableau de bord (2) du véhicule, qui s'étend, lorsqu'il est monté, dans la direction transversale du véhicule et dans lequel lesdites deux unités sont fixées à l'élément de tableau de bord de telle façon que les unités soient disposées côte à côte dans le tableau de bord lorsqu'elles sont montées ;
une première partie formant liaison (46) disposée à la partie supérieure de ladite unité de conditionnement d'air, qui est susceptible d'être fixée ou assujettie audit élément de tableau de bord ;
une seconde partie formant liaison (58) disposée à la partie supérieure de ladite unité formant soufflante, qui est susceptible d'être fixée audit élément de tableau de bord ;
une admission d'air (21) pour introduire l'air provenant de ladite unité formant soufflante dans ladite unité de conditionnement d'air ; et
une partie formant liaison (60, 61) pour raccorder lesdites deux unités, qui est disposée près de ladite admission d'air (21).

2. Système de climatisation de véhicule selon la revendication 1, **caractérisé en ce que** ladite partie formant liaison (60, 61) est disposée dans les parties inférieures desdites deux unités.

3. Système de climatisation de véhicule selon la revendication 2, **caractérisé en ce que** ladite première partie formant liaison (46, 46) est disposée sur les deux parois latérales de ladite unité de conditionnement d'air.

4. Système de climatisation de véhicule selon la revendication 2, **caractérisé en ce que** ladite seconde partie formant liaison (58, 58) est disposée sur les deux parois latérales de ladite unité de conditionnement d'air.

5. Système de climatisation de véhicule selon la revendication 3, **caractérisé en ce que** ladite seconde partie formant liaison (58, 58) est disposée sur les deux parois latérales de ladite unité de conditionnement d'air.

6. Système de climatisation de véhicule selon la revendication 5, **caractérisé en ce que** l'une des dites premières parties formant liaison (46), disposée sur une paroi latérale qui se situe du côté de l'unité formant soufflante et l'une desdites secondes parties formant liaison (58), disposée sur une paroi latérale qui se situe du côté de l'unité de conditionnement d'air viennent en chevauchement et **en ce que** lesdites parties formant liaison (46, 58), disposées en chevauchement, sont fixées audit élément de tableau de bord (7).

7. Système de climatisation de véhicule selon l'une des revendications 1 à 6, **caractérisé en ce qu'**au moins l'une desdites première et seconde parties formant liaison est fixée directement audit élément de tableau de bord.

8. Système de climatisation de véhicule selon l'une des revendications 1 à 6, **caractérisé en ce que** ladite seconde partie formant liaison (58) est disposée sur une paroi latérale de ladite unité formant soufflante qui se situe du côté opposé à ladite unité de conditionnement d'air, et **en ce que** la partie formant liaison (58) est fixée directement audit élément de tableau de bord (7).

9. Système de climatisation de véhicule selon l'une des revendications 1 à 6, **caractérisé en ce qu'**au moins l'une desdites seconde parties formant liaison est fixée directement audit élément de tableau de bord et **en ce qu'**une surface de fixation ou assujettissement de la partie formant liaison à l'élément de tableau de bord présente une configuration qui est en accord avec la forme externe de l'élément de tableau de bord, vue à partir de la direction transversale du véhicule.

10. Système de climatisation de véhicule selon l'une des revendications 1 à 6, **caractérisé en ce que** ladite partie formant liaison (60, 61) est disposée respectivement sur chacune desdites unité de conditionnement d'air et unité formant soufflante, et **en ce que** les deux unités sont reliées par la partie formant liaison.

11. Système de climatisation de véhicule selon l'une des revendications 1 à 6, **caractérisé en ce que** ladite partie formant liaison (60, 61) est disposée respectivement sur chacune desdites unité de conditionnement d'air et unité formant soufflante, **en ce qu'**une des parties formant liaison est une projection (60) et l'autre partie formant liaison est un trou (61), **en ce que** la projection est pourvue d'un crochet (64) à son extrémité, et **en ce que** la projection est insérée dans le trou tandis que le crochet y est verrouillé.

12. Système de climatisation de véhicule selon l'une des revendications 1 à 6, **caractérisé en ce que** ladite partie formant liaison (60, 61) est disposée respectivement sur chacune desdites unité de conditionnement d'air et unité formant soufflante, **en ce que** les deux unités sont reliées par ladite partie formant liaison, et **caractérisé en ce que** ladite admission d'air (21) pour introduire l'air provenant de ladite unité formant soufflante dans ladite unité de conditionnement d'air est prévue, quand elle est montée sur la face frontale du véhicule.

13. Système de climatisation de véhicule selon l'une des revendications 1 à 6, **caractérisé en ce que** ladite partie formant liaison (60, 61) est disposée respectivement sur chacune desdites unité de conditionnement d'air et unité formant soufflante, **en ce que** les deux unités sont reliées par ladite partie formant liaison,**en ce qu'**une admission d'air (21) pour introduire l'air provenant de ladite unité formant soufflante dans ladite unité de conditionnement d'air est prévue sur la face frontale du véhicule, **en ce que** l'unité de conditionnement d'air inclut un échangeur de chaleur (25) pour la réfrigération de l'air introduit à travers l'admission d'air ainsi qu'un échangeur de chaleur (26) pour le réchauffage de l'air circulant vers le bas à travers l'échangeur de chaleur pour la réfrigération de l'air, et **en ce que** ladite partie formant liaison (60, 61) est disposée près de l'admission d'air (21) et en une position plus basse de l'échangeur de chaleur (25) pour la réfrigération de l'air.

14. Système de climatisation de véhicule selon l'une des revendications 1 à 6, **caractérisé en ce que** ladite partie formant liaison (60, 61) est disposée respectivement sur chacune desdites unité de conditionnement d'air et unité formant soufflante, **en ce que** les deux unités sont reliées par la partie formant liaison, **en ce qu'**une admission d'air (21) pour introduire l'air provenant de ladite unité formant soufflante dans ladite unité de conditionnement d'air est prévue sur la face frontale du véhicule, **en ce que** l'unité de conditionnement d'air inclut un échangeur de chaleur (25) pour la réfrigération de l'air introduit à travers l'admission d'air ainsi qu'un échangeur de chaleur (26) pour le réchauffage de l'air circulant vers le bas à travers l'échangeur de chaleur pour la réfrigération de l'air, **en ce que** l'échangeur de chaleur pour la réfrigération de l'air est disposé dans l'unité de conditionnement d'air de telle façon qu'il s'étend dans une direction pratiquement verticale,**en ce que** l'échangeur de chaleur pour le réchauffage de l'air est disposé en arrière de l'échangeur de chaleur pour la réfrigération de l'air, de telle façon qu'il soit incliné d'une manière telle que son extrémité supérieure soit éloignée de l'échangeur de chaleur pour la réfrigération de l'air, et **en ce que** ladite partie formant liaison (60, 61) est disposée près de l'admission d'air (21) et en position plus basse de l'échangeur de chaleur pour la réfrigération de l'air (25).

15. Système de climatisation de véhicule selon l'une des revendications 1 à 6, **caractérisé en ce qu'**une troisième partie formant liaison (68, 45) à fixer à la carrosserie du véhicule est prévue pour chacune des dites deux unités (3, 4).

16. Système de climatisation de véhicule selon l'une des revendications 1 à 6, **caractérisé en qu**'une troisième partie formant liaison (68) à fixer à la carrosserie du véhicule est prévue pour ladite unité formant soufflante (3).

17. Système de climatisation de véhicule selon l'une des revendications 1 à 6, **caractérisé en qu**'une troisième partie formant liaison (68) à fixer à la carrosserie du véhicule est prévue pour ladite unité de conditionnement d'air (4).

18. Système de climatisation de véhicule selon l'une des revendications 1 à 6, **caractérisé en ce qu'**une troisième partie formant liaison (68, 45) à fixer à la carrosserie du véhicule est prévue sur lesdites deux unités (3, 4) respectivement, chacune des troisièmes parties formant liaison des deux unités venant en chevauchement et étant fixée à la carrosserie du véhicule.

19. Système de climatisation de véhicule selon l'une des revendications 1 à 6, **caractérisé en ce qu'**un support (52, 54) s'étendant vers le bas est fixé à l'élément de tableau de bord et **en ce qu'**une partie inférieure formant liaison (53, 55), fixée à une extrémité inférieure du support, est disposée dans une zone plus basse de l'unité de conditionnement d'air.

20. Système de climatisation de véhicule selon l'une des revendications 1 à 6, **caractérisé en ce que** deux supports (52, 54) s'étendant vers le bas sur les deux côtés de l'unité de conditionnement d'air sont fixés à l'élément de tableau de bord respectivement, et **en ce que** les parties inférieures de liaison (53, 55) fixées aux extrémités inférieures des supports sont disposées à la partie inférieure de l'unité de conditionnement d'air.

21. Système de climatisation de véhicule selon l'une des revendications 1 à 6, **caractérisé en ce que** deux supports (52, 54) s'étendant vers le bas et vers l'arrière du véhicule, sur les deux côtés de l'unité de conditionnement d'air sont fixés à l'élément de tableau de bord respectivement, et **en ce que** les parties inférieures formant liaison (53, 55) fixées aux extrémités inférieures des supports sont disposées à la partie inférieure de l'unité de conditionnement d'air.

22. Système de climatisation de véhicule selon l'une des revendications 1 à 6, **caractérisé en ce que** deux supports (52, 54) s'étendant vers le bas et vers l'arrière du véhicule, sur les deux côtés de l'unité de conditionnement d'air sont fixés à l'élément de tableau de bord respectivement, **en ce que** les parties inférieures formant liaison (53, 55) fixées aux extrémités inférieures des supports sont disposées à la partie inférieure de l'unité de conditionnement d'air, **en ce que** ladite partie formant liaison (60) est disposée sur la face frontale de la partie inférieure formant liaison (53, 55), et **en ce que** ladite première partie formant liaison (46), la partie inférieure formant liaison (53, 55) et la partie formant liaison (60) sont disposées de manière telle que ces parties soient situées au vertex d'un triangle, vu à partir de la direction transversale du véhicule.

23. Système de climatisation de véhicule selon l'une des revendications 1 à 6, **caractérisé en ce qu'**un amortisseur (27) est disposé dans l'un et l'autre boîtier ou réceptacle des dites unités formant soufflante ou de ladite unité de conditionnement d'air pour commander un courant d'air à conditionner ou d'air conditionné, **en ce qu'**un organe de solidarisation (125) pour commander l'amortisseur est disposé à la surface externe desdits boîtiers ou réceptacles, et **en ce qu'**une partie d'accrochage temporaire (136) est disposée de telle façon que l'organe de solidarisation soit fixé de façon temporaire à la surface externe dans sa position prédéterminé en installant une pièce d'arrêt (137) ou arrêtoir.

24. Système de climatisation de véhicule selon l'une des revendications 1 à 6, **caractérisé en ce qu'**un amortisseur (27) est disposé dans l'un et l'autre boîtier des dites unités formant soufflante ou de ladite unité de conditionnement d'air pour commander un courant d'air à conditionner ou d'air conditionné, **en ce qu'**un organe de solidarisation (125) pour commander l'amortisseur est disposé à la surface externe de l'un et l'autre boîtier,**en ce qu'**une partie d'accrochage temporaire (136) est disposée de telle façon que l'organe de solidarisation soit fixé de façon temporaire à la surface externe dans sa position prédéterminée en installant une pièce d'arrêt (137), **en ce que** la partie d'accrochage temporaire (136) inclut une projection (136a) partant de la surface externe, ainsi qu'une rainure (136b) qui débouche sur une surface terminale de la projection et s'étend de façon rectiligne le long de la surface externe et dont une partie terminale débouche sur une surface périphérique externe de la projection, **en ce que** l' organe de solidarisation est muni d'une rainure (140b) antagoniste avec ladite rainure (136b) quand l'organe de solidarisation est situé dans ladite position prédéterminée, et **en ce que** la pièce d'arrêt inclut deux parties d'insertion (142, 144) s'insérant dans les rainures respectives (136b, 140b) de la partie d'accrochage temporaire et de l'organe de solidarisation ainsi qu'un crochet (143) susceptible de verrouillage/déverrouillage avec une partie disposée, soit dans la partie d'accrochage temporaire, soit dans l'organe de solidarisation

25. Système de climatisation de véhicule selon l'une des revendications 1 à 6, **caractérisé en ce qu'**un amortisseur (27) est disposé dans l'un et l'autre boîtier des dites unités formant soufflante ou de ladite unité de conditionnement d'air pour commander un courant d'air à conditionner ou d'air conditionné,**en ce qu'**un organe de solidarisation (125) pour commander l'amortisseur est disposé à la surface externe dudit boîtier à sa position prédéterminée, en qu'une partie d'accrochage temporaire (136) est disposée de telle façon que l'organe de solidarisation soit temporairement fixé à la surface externe dans sa position prédéterminée en installant une pièce d'arrêt (137), et **en ce que** ladite surface externe du boîtier où l'organe de solidarisation est disposé s'étend dans une direction sensiblement perpendiculaire à la direction transversale du véhicule.

26. Système de climatisation de véhicule selon l'une des revendications 1 à 6, **caractérisé en ce qu'**un amortisseur (27) est disposé dans l'un et l'autre boîtier des dites unités formant soufflante ou de ladite unité de conditionnement d'air pour commander un courant d'air à conditionner ou d'air conditionné,**en ce qu'**un organe de solidarisation (125) pour commander l'amortisseur est disposé à la surface externe de l'un et l'autre dit boîtier et sur sa surface latérale antagoniste à l'autre réceptacle, **en ce qu'**une partie d'accrochage temporaire (136) est disposée de telle façon que l'organe de solidarisation soit temporairement fixé à la surface externe dans sa position prédéterminée en installant une pièce d'arrêt (137),et **en ce que** la pièce d'arrêt est formée de telle sorte qu'elle puisse être enlevée de sa position insérée dans la partie d'accrochage temporaire dans la direction longitudinale du véhicule.

27. Système de climatisation de véhicule selon l'une des revendications 1 à 6, **caractérisé en ce que** la dite partie formant liaison (60, 61) est disposée à la fois sur lesdites unité de conditionnement d'air et unité formant soufflante, **en ce que** les deux unités sont reliées par la partie formant liaison, **en ce qu'**un amortisseur (27) est disposé dans un boîtier ou enveloppe desdites unités formant soufflante pour commander un courant d'air à conditionner, **en ce qu'**un organe de solidarisation (125) pour la commande de l'amortisseur est disposé à la surface externe du boîtier de l'unité formant soufflante, **en ce qu'**une partie d'accrochage temporaire (136) est disposée de sorte que l'organe de solidarisation soit temporairement fixé à la surface externe dans sa position prédéterminée en installant une pièce d'arrêt (137), et **en ce que** ladite surface externe du boîtier de l'unité formant soufflante où l'organe de solidarisation est disposé est une surface latérale située sur le côté de l'unité de conditionnement d'air et s'étend dans une direction sensiblement perpendiculaire à la direction transversale du véhicule.

28. Système de climatisation de véhicule selon l'une des revendications 1 à 6, **caractérisé en ce que** la dite partie formant liaison (60, 61) est disposée à la fois sur lesdites unité de conditionnement d'air et unité formant soufflante, **en ce que** les deux unités sont reliées par la partie formant liaison, **en ce qu'**un amortisseur (27) est disposé dans un boîtier desdites unités formant soufflante ou sur la dite unité de conditionnement d'air pour commander un courant d'air à conditionner, ou d'air conditionné, **en ce qu'**un organe de solidarisation (125) pour la commande de l'amortisseur est disposé à la surface externe de l'un et l'autre boîtier, **en ce qu'**une partie d'accrochage temporaire (136) est disposée de sorte que l'organe de solidarisation soit temporairement fixé à la surface externe dans sa position prédéterminée en installant une pièce d'arrêt (137), **en ce que** la partie d'accrochage temporaire (136) inclut une projection (136a) partant de la surface externe ainsi qu'une rainure (136b) qui débouche sur une surface terminale de la projection et s'étend de façon rectiligne le long de la surface externe et dont une partie terminale débouche sur une surface périphérique externe de la projection, **en ce que** l'organe de solidarisation est muni d'une rainure (140b) antagoniste avec ladite rainure (136b) quand l'organe de solidarisation est situé dans ladite position prédéterminée, et **en ce que** la pièce d'arrêt inclut deux parties d'insertion (142, 144) s'insérant dans les rainures respectives (136b, 140b) de la partie d'accrochage temporaire et de l'organe de solidarisation, ainsi qu'un crochet (143) susceptible de verrouillage/déverrouillage avec une partie disposée, soit dans la partie d'accrochage temporaire, soit dans l'organe de solidarisation et des parties médianes (145, 145) s'étendant vers l'extérieur à partir des deux faces de la pièce d'arrêt entre les deux parties d'insertion (142, 144) et supportées entre une surface terminale de la projection (140a) et une surface terminale opposée, antagoniste avec ou située en regard très près de ladite surface terminale de la projection (140a).

29. Système de climatisation de véhicule selon l'une des revendications 1 à 6, **caractérisé en ce que** la dite partie formant liaison (60, 61) est disposée à la fois sur lesdites unité de conditionnement d'air et unité formant soufflante, **en ce que** les deux unités sont reliées par la partie formant liaison, **en ce qu'**un amortisseur (27) est disposé dans un boîtier desdites unités formant soufflante ou de la dite unité de conditionnement d'air pour commander un courant d'air à conditionner, **en ce qu'**un organe de solidarisation (125) pour la commande de l'amortisseur est disposé à la surface externe de l'un et l'autre dit boîtier, **en ce qu'**une partie d'accrochage temporaire (136) est disposée de sorte que l'organe de solidarisation soit temporairement fixé à la surface externe dans sa position prédéterminée en installant une pièce d'arrêt (137), **en ce que** la partie d'accrochage temporaire (136) inclut une projection (136a) partant de la surface externe ainsi qu'une rainure (136b) qui débouche sur une surface terminale de la projection et s'étend de façon rectiligne le long de la surface externe et dont une partie terminale débouche sur une surface périphérique externe de la projection, **en ce que** l'organe de solidarisation est muni d'une rainure (140b) antagoniste avec ladite rainure (136b) quand l'organe de solidarisation est situé dans ladite position prédéterminée, **en ce que** la pièce d'arrêt est un produit de moulage en résine et inclut deux parties d'insertion (142, 144) s'insérant dans les rainures respectives (136b, 140b) de la partie d'accrochage temporaire et de l'organe de solidarisation, ainsi qu'un crochet (143) susceptible de verrouillage/déverrouillage avec une partie disposée soit dans la partie d'accrochage temporaire, soit dans l'organe de solidarisation, **en ce qu'**une face d'une surface latérale (142a, 144a) de la partie d'insertion de la pièce d'arrêt (142, 144) est une surface formant contact avec une face de la surface interne de la rainure (140b, 136b) de l'organe de solidarisation ou de la partie d'accrochage temporaire, et **en ce que** sont prévues sur une face opposée à ladite surface formant contact de la partie d'insertion, une pluralité de parties formant projection (142b, 142, 144b, 144b) en contact avec l'autre face de la surface interne des rainures (140b, 136b) et se croisant mutuellement.

30. Système de climatisation de véhicule selon l'une des revendications 1 à 6, comprenant en outre :
un élément de tuyau ou de tube (29, 31) s'étendant vers l'avant du véhicule à travers un trou (37) formé sur le tableau de bord du véhicule; et un élément de guidage (40) s'étendant vers l'avant du véhicule pour le guidage dudit élément de tuyau vers le trou.

31. Procédé de fixation à un tableau de bord d'un véhicule, d'un système de climatisation d'air, incluant une unité de conditionnement d'air (4) pour fournir de l'air conditionné par un échangeur de chaleur et une unité formant soufflante (3) pour fournir un air à conditionner à ladite unité de conditionnement d'air, ledit procédé comprenant:
une phase de pré-assemblage dans laquelle les parties supérieures respectives de ladite unité de conditionnement d'air et de ladite unité formant soufflante sont fixées à un élément de tableau de bord (7) qui s'étend, lorsqu'il est monté, dans la direction transversale du véhicule et est disposé dans ledit tableau de bord, à l'extérieur du véhicule; et une phase d'assemblage de la carrosserie du véhicule dans laquelle ledit tableau de bord pré-assemblé est transféré dans la carrosserie du véhicule et fixé à ladite carrosserie après ladite phase de pré-assemblage, **caractérisé en ce que** ladite phase de pré-assemblage comprend:
une phase de fixation ou accrochage d'unité dans laquelle ladite unité de conditionnement d'air et ladite unité formant soufflante sont respectivement fixées audit élément de tableau de bord;
une phase d'accouplement dans laquelle un ventilateur de ladite unité formant soufflante ainsi qu'une admission d'air (21) de ladite unité de conditionnement d'air sont accouplés pendant ou après ladite phase de fixation d'unité; et
une phase de liaison dans laquelle des parties formant liaison (45, 68), disposées respectivement sur ladite unité de conditionnement d'air et ladite unité formant soufflante, sont raccordées ou interconnectées pendant ou après ladite phase de fixation d'unité.

32. Procédé de fixation d'un système de climatisation d'air à un tableau de bord d'un véhicule selon la revendication 31, **caractérisé en ce que** ladite phase de fixation d'unité est une phase dans laquelle en premier lieu, ladite unité de conditionnement d'air est fixée audit élément de tableau de bord et ensuite ladite unité formant soufflante est fixée audit élément de tableau de bord; et **en ce que** ladite phase de liaison est une phase dans laquelle ladite unité formant soufflante est fixée audit élément de tableau de bord dans ladite phase de fixation d'unité, ladite partie formant liaison (68) de l'unité formant soufflante étant reliée à ladite partie formant liaison (45) de l'unité de conditionnement d'air.

33. Procédé de fixation d'un système de climatisation d'air au tableau de bord d'un véhicule selon la revendication 32, **caractérisé en ce que** soit la dite partie formant liaison de l'unité de conditionnement d'air, soit la partie formant liaison de l'unité formant soufflante est une projection (60) tandis que les autres desdites parties formant liaison sont un trou (61), **en ce que** la projection est pourvue d'un crochet (64) à son extrémité qui est inséré dans le trou et verrouillé dans celui-ci, et **en ce que** la dite liaison desdites parties formant liaison de l'unité de conditionnement d'air et de l'unité formant soufflante est réalisée en insérant la dite projection (60) dans ledit trou (61) avec verrouillage dudit crochet (64) dans la dite phase de liaison.

34. Procédé de fixation d'une unité de conditionnement d'air à un tableau de bord d'un véhicule selon l'une des revendications 31 à 33, **caractérisé en ce que** la dite unité de conditionnement d'air pour véhicule comprend un élément de tuyau (29, 31) s'étendant vers l'avant du véhicule à travers un trou (33) formé sur le tableau de bord du véhicule, ainsi qu'un élément de guidage (40) s'étendant vers l'avant du véhicule à travers un trou de guidage (37) pour le guidage dudit élément de tuyau vers le trou, et, lorsque ledit tableau de bord est fixé à la carrosserie du véhicule dans la dite phase d'assemblage de la carrosserie, **caractérisé en ce que** ledit élément de guidage (40) est inséré dans ledit trou de guidage (37) de telle façon que ledit élément de tuyau traverse ledit trou (37).
